# EUROPÄISCHE PATENTSCHRIFT

(11) **EP 1 581 381 B1**
(45) Veröffentlichungstag und Bekanntmachung des Hinweises auf die Patenterteilung: **17.10.2007**
(21) Anmeldenummer: 03794752.0
(22) Anmeldetag: 15.09.2003
(51) Int. Cl.: B29C 70/46, B29D 31/00, B29C 70/34

(54) **STRUKTURBAUTEIL, VERFAHREN UND ANLAGE ZUR HERSTELLUNG VON STRUKTURBAUTEILEN AUS FASERVERSTÄRKTEM THERMOPLASTISCHEM KUNSTSTOFF**
STRUCTURAL COMPONENT, METHOD AND INSTALLATION FOR THE PRODUCTION OF STRUCTURAL COMPONENTS FROM FIBER-REINFORCED THERMOPLASTIC MATERIAL
ELEMENT STRUCTUREL, PROCEDE ET INSTALLATION POUR FABRIQUER DES ELEMENTS STRUCTURELS EN MATIERE THERMOPLASTIQUE RENFORCEE PAR DES FIBRES

(30) Priorität: 15.09.2002 CH 15662002
(43) Veröffentlichungstag der Anmeldung: 05.10.2005
(73) Patentinhaber: Weber Technology AG, 8700 Küsnacht (CH)
(72) Erfinder: HÜSLER, Daniel, CH-8053 Zürich (CH); RÜEGG, Andreas, CH-8053 Zürich (CH)
(86) Internationale Anmeldenummer: PCT/CH2003/000620
(87) Internationale Veröffentlichungsnummer: WO 2004/024426

(56) Entgegenhaltungen:
- WO-A-90/06226
- WO-A-99/52703

## Beschreibung

Die Erfindung betrifft ein Verfahren zur Herstellung von strukturellen Bauteilen aus Langfaser-Thermoplast mit integrierten Endlosfaser-Verstärkungen gemäss Oberbegriff von Anspruch 1 sowie eine Anlage zur Herstellung solcher Strukturbauteile. Bekannte Verfahren zur Herstellung solcher Strukturbauteile verwenden meist flächige Endlosfaser-Verstärkungen z.B. in Form von Gewebe-Halbzeugen oder mit einem SandwichAufbau, die jedoch sehr eingeschränkt sind bez. möglicher Formgebungen und Anwendungen.

Aus der WO99/52703 ist ein Verfahren und eine Anlage zur Herstellung von Strukturbauteilen gemäß dem Oberbegriff der Ansprüche 1, 29 und 33 bekannt, bei dem geschmolzene Endlosfaser-Stränge übereinander abgelegt werden, so dass sie eine zusammenhängende Tragstruktur mit flächigen Verbindungsstellen bilden und mit einer formbildenden langfaserverstärkten Masse in einem Werkzeug verpresst werden. Auch diese bekannten Verfahren weisen noch wesentliche Nachteile auf bezüglich rationeller Herstellung, Reproduzierbarkeit und definierter Ausbildung einer integrierten Endlosfaser-Tragstruktur. Es ist so nicht möglich, ein definiertes einstückiges, in einem Verpressungsschritt herstellbares Strukturbauteil zu schaffen, welches eine integrierte, genau definierte, optimal positionierte und geformte, lastoptimierte Endlosfaser-Verstärkungsstruktur enthält.

Es ist daher Aufgabe der vorliegenden Erfindung, die Nachteile und Beschränkungen der bekannten Herstellverfahren zu überwinden und ein Verfahren zur rationellen, automatischen Herstellung von strukturellen Bauteilen zu schaffen, das die bisherigen Nachteile und Beschränkungen überwindet und einstückige, in einem Schritt verpressbare Bauteile mit integrierter, genau definierter, optimal positionierter und dreidimensional geformter Verstärkungsstruktur zu schaffen, welche den aufzunehmenden Lasten und Kräften entspricht. Diese Aufgabe wird erfindungsgemäss gelöst durch ein Verfahren zur Herstellung von strukturellen Bauteilen nach Anspruch 1 und durch eine Anlage zur Herstellung von strukturellen Bauteilen nach Anspruch 29. Durch die definierte, kurze Schockkühlung mit EF(Endlosfaser)-Profil-Formung und die Bildung einer formstabilen Mantelschicht wird eine genau definierte Form und Positionierung von EF-Profilen in der LFT-(Langfaser-Thermoplast)-Masse sowie eine optimale Verbindung am Interface erreicht.

Die abhängigen Patentansprüche betreffen vorteilhafte Weiterbildungen der Erfindung mit besonderen Vorteilen bezüglich rationeller serienmässiger und automatisierbarer, kostengünstiger Herstellung mit kurzen Taktzeiten sowie optimaler Ausrichtung und Formgebungen der Endlosfaser-Verstärkungsstrukturen und bezüglich leichterer Strukturbauteilen mit verbesserten mechanischen Eigenschaften. Damit können leichte Strukturbauteile für eine Vielzahl von Anwendungen, z.B. für Transportmittel, Fahrzeuge und Fahrzeugkomponenten mit tragenden Funktionen, einfach und präzise hergestellt werden.

Im Folgenden wird die Erfindung anhand von Ausführungsbeispielen und Figuren weiter erläutert, dabei zeigen:
- Fig. 1: schematisch das erfindungsgemässe Verfahren mit Profilformung und definiertem Schockkühlen,
- Fig. 2: Temperaturverläufe in einem EF-Profil beim Schockkühlen mit verschiedenen Schockkühlzeiten,
- Fig. 3: Temperaturverläufe in einem EF-Profil beim Schockkühlen mit verschiedenen Werkzeugtemperaturen und Wärmeübergängen,
- Fig. 4: ein Beispiel mit bereichsweise unterschiedlichen Schockkühlungen an einem EF-Profil,
- Fig. 5a: die Enthalpie in Funktion der Temperatur beim Aufheizen und Abkühlen von teilkristallinen Thermoplasten mit einem Kristallisations-Hysteresbereich,
- Fig. 5b: die Temperaturführung an der Oberfläche bei der Schockkühlung im Enthalpiediagramm,
- Fig. 5c: die Temperaturführung in der Unterschicht bei der Schockkühlung im Enthalpiediagramm,
- Fig. 6: den Temperaturverlauf im EF-Profil nach der Schockkühlung,
- Fig. 7: den Temperaturverlauf im EF-Profil und in der LFT-Schicht beim Verpressen im LFT-Werkzeug,
- Fig. 8a: eine Anordnung von mehreren EF-Profilen in einem Strukturbauteil mit einer dreidimensionalen Kreuzungsstelle,
- Fig. 8b: die LFT-Formgebung des Bauteils mit integrierten EF-Profilen,
- Fig. 8c: einen zweistufigen Profil-Formprozess,
- Fig. 9a, b: zwei verschiedene Querschnittsformen eines EF-Profils an verschiedenen Stellen in einer Rippe,
- Fig. 10: ein invers temperiertes EF-Profil,
- Fig. 11: eine EF-Profil-Herstelllinie mit EF-Profil-Formstation,
- Fig. 12: eine Anlage zur Herstellung der erfindungsgemässen Strukturbauteile mit EF-Profil-Formstation und LFT-Presse,
- Fig. 13: eine Positionierung von EF-Profilen oben und unten an einem LFT-Presswerkzeug,
- Fig. 14: ein Strukturbauteil als Stossfängerträger,
- Fig. 15: ein Strukturbauteil als Montageträger (Frontend).

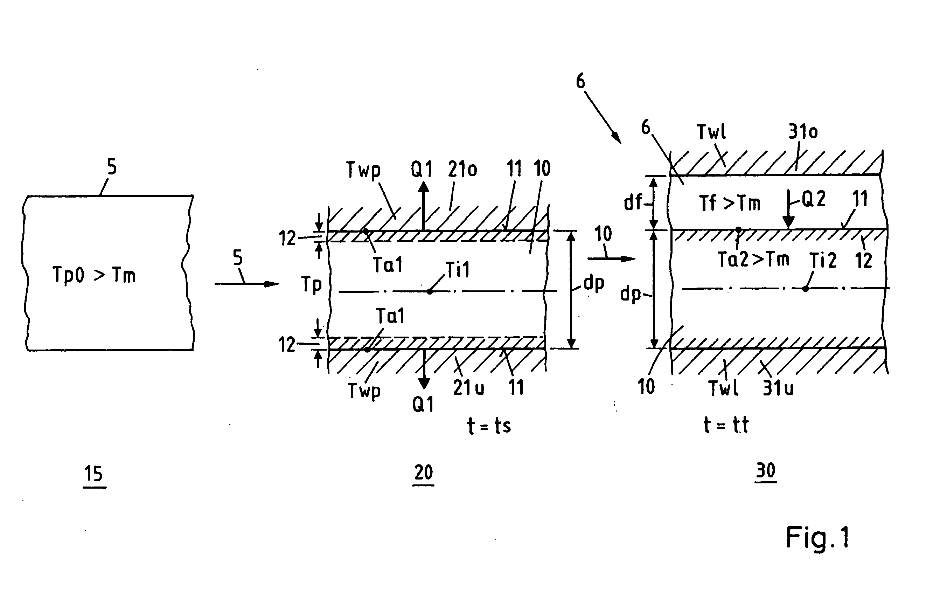

Fig. 1 stellt das erfindungsgemässe Verfahren zur Herstellung von strukturellen Bauteilen aus Langfaser-Thermoplast (LFT) mit integrierten Endlosfaser(EF)-Verstärkungen in einem einstufigen LFT-Pressverfahren mittels Schockkühlen und EF-Profil-Formpressen im Ablauf schematisch dar. In einer Aufheizstation 15 werden imprägnierte, bzw. vorkonsolidierte EF-Bänder 5 vollständig aufgeschmolzen auf eine praktisch homogene Temperatur Tp0, welche deutlich über dem Schmelzpunkt Tm liegt, und anschliessend in ein zweiteiliges Profilwerkzeug 21 (hier in 21u) einer EF-Profil-Formstation 20 transferiert. Hier werden die EF-Bänder 5 mit einer Eingangstemperatur Tp zum gewünschten EF-Profil 10 geformt durch kurzzeitige Verpressung während einer genau definierten Schockkühlzeit ts. Bei diesem Formpressen und Schockkühlen wird durch den Kontakt mit dem thermisch konditionierten Profilwerkzeug 21, bzw. 21.o (oberes) und 21u (unteres), mit einer definierten, relativ tiefen Werkzeugtemperatur Twp und durch einen hohen Wärmeübergang Q1 vom heissen EF-Profil in das Formwerkzeug 21 eine schockgekühlte, formstabile dünne Mantelschicht 12 gebildet. Nach definierter Schockkühl- und Presszeit ts wird das EF-Profil 10 sofort vollständig vom Profilwerkzeug getrennt, in ein LFT-Werkzeug 31 (31o, 31u) einer LFT-Presse 30 transferiert und dort in passenden Ausformungen des Werkzeugs genau definiert positioniert. Anschliessend wird eine geschmolzene LFT-Masse 6 mit einer Temperatur Tf, welche über dem Schmelzpunkt Tm liegt, eingebracht und mit dem EF-Profil 10 zusammen unter Druck gesetzt und verpresst, so dass die Mantelschicht 12 an der Oberfläche 11 der EF-Profile wieder aufgeschmolzen und mit der umgebenden eingebrachten LFT-Masse 6 thermoplastisch verschmolzen wird.

Diese Strukturbauteile enthalten mindestens ein integriertes, schockgekühltes EF-Profil. Die Temperaturführung bei diesem Verfahren, d.h. die Einstellung der thermischen und zeitlichen Parameter und der Schockkühlzeit ts erfolgt entsprechend folgenden Anforderungen, welche mit dem erfindungsgemässen Verfahren erreicht werden können:
- a: An den Kontaktstellen des EF-Profils mit einem Greifer zum Transfer in die LFT-Presse 30, wird eine nicht klebende, feste Profiloberfläche gebildet.
- b: Die Formstabilität der EF-Profile 10 beim Transfer in die LFT-Presse muss genügend sein, so dass die EF-Profile genau in der gewünschten Lage und Form im LFT-Werkzeug positioniert werden können.
- c: Die Formerhaltung des EF-Profils beim Verpressen mit der LFT-Masse 6 in der LFT-Presse wird so eingestellt, dass nach dem Verpressen die gewünschte Endform des EF-Profils im Bauteil resultiert je nach lokaler Anforderung (von gewünschter vollständiger Formerhaltung bis zu bereichsweise starkem Verfliessen des EF-Profils in der umgebenden LFT-Masse).
- d: Die Interface-Verbindung an den Kontaktflächen 9 zwischen dem EF-Profil und der umgebenden LFT-Masse muss die erforderliche Festigkeit erreichen.

Dementsprechend wird die Ausbildung der verfestigten Mantelschicht 12 grösser oder kleiner gewählt.
Als grobe Richtlinie gilt: je stärker die Schockkühlung, desto höher ist die Formerhaltung (Eigenschaften a, b, c) und mit geringerer Schockkühlung wird die Formänderung beim Verpressen erhöht und anfangs auch die Interface-Verbindung (Eigenschaft d) noch verstärkt.

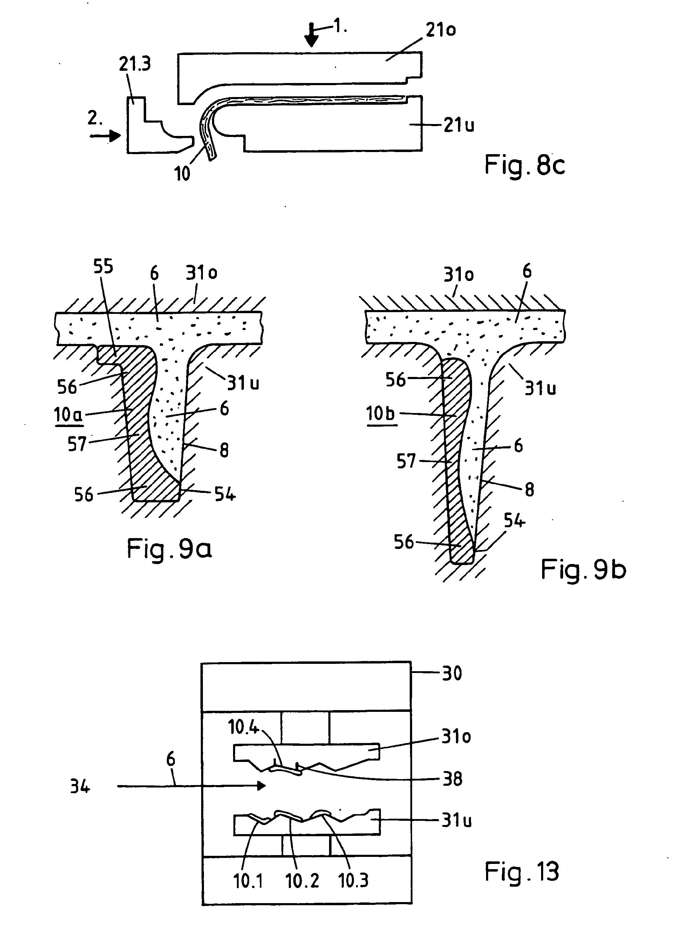

Ein Beispiel mit hoher Formerhaltung zeigt Fig. 9a mit einem EF-Profil in einer Rippe. Auf der einen Seite des EF-Profils (am unteren LFT-Werkzeug 31u anliegend) kann eine stärkere Schockkühlung mit stärkerer Mantelschicht erfolgen, während auf der gegenüberliegenden Seite des EF-Profils dennoch eine gute Interface-Verbindung zur eingebrachten umgebenden LFT-Masse 6 durch mittlere Schockkühlung mit normal ausgebildeter Mantelschicht erreicht wird (auf der Seite des oberen LFT-Werkzeugs 31o von Fig. 1).

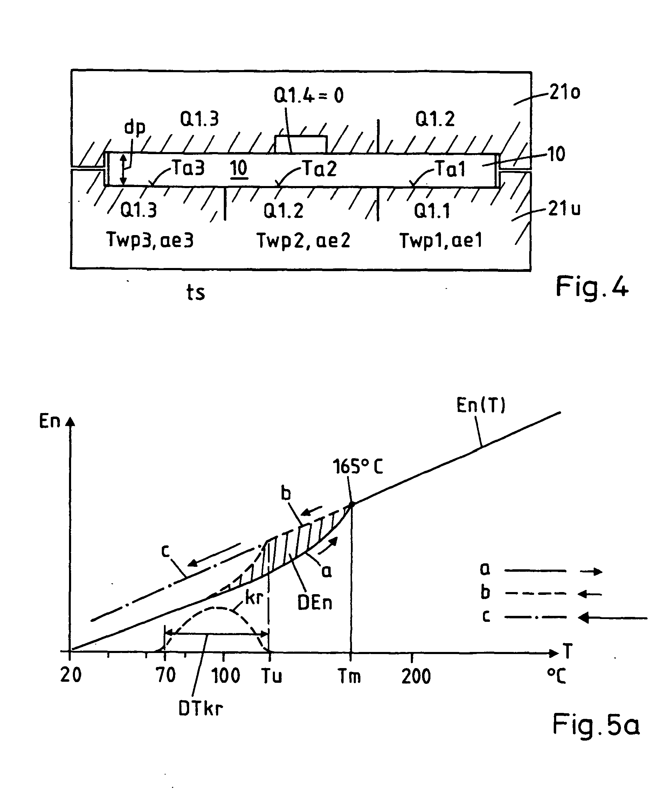

Generell kann eine am LFT-Werkzeug 31 anliegende Oberfläche (11) der EF-Profile vorher einseitig stark schockgekühlt werden (da sie ja nachher nicht mit LFT-Masse verbunden werden muss) und gleichzeitig die gegenüberliegende Seite schwächer schockgekühlt werden zur optimalen Verbindung mit der LFT-Masse (siehe Fig. 4).

Die optimale Temperaturführung entsprechend den jeweiligen Anforderungen an die EF-Profile (10) wird erreicht durch entsprechende Einstellung der Prozess-Parameter. Dies sind:
- Tp: die Anfangstemperatur des EF-Profils vor der Schockkühlung, nach dem Aufheizen auf eine homogene Temperatur Tp0 in der Heizstation 15.

### Bei der Schockkühlung:

- ts: die Schockkühlzeit, d.h. die Dauer der Verpressung und damit des Wärmeübergangs Q1
- Twp: die Temperatur des Profil-Werkzeugs 21
- ae: der Wärmeeindring-Koeffizient beim Kontakt mit dem Werkzeug 21; dieser wird durch Materialwahl und Eigenschaften des Werkzeugs bestimmt: spezifische Wärme c, Wärmeleitfähigkeit λ und spezifische Dichte p.
Damit ergibt sich ae = (λ. p . c)^{½}.
- Q1: Der Wärmeübergang vom EF-Profil 10 auf das Werkzeug 21 ist damit gegeben durch Q1 = f(ts, Tp - Twp, ae).
- Ta, Ti: Temperaturen an der Oberfläche 11 bzw. im Inneren des EF-Profils
- tt: Transferzeit bis zum Kontakt des EF-Profils mit der LFT-Masse in der LFT-Presse.

### Wärmeübergang bei der LFT-Verpressung:

- Tf: Temperatur der eingeführten LFT-Masse 6 vor der Verpressung
- Tw1: Temperatur des LFT-Werkzeugs 31
- Q2: der Wärmeübergang von der heissen LFT-Masse 6 auf das EF-Profil 10 ergibt sich hier als Funktion f(Q1, Ta, Ti, Tf, Tw1).

Bei der Einstellung dieser Parameter werden auch die Dicke dp der EF-Profile und die Materialeigenschaften einbezogen. Die Dicke dp kann beispielsweise zwischen 2 und 5 mm liegen.

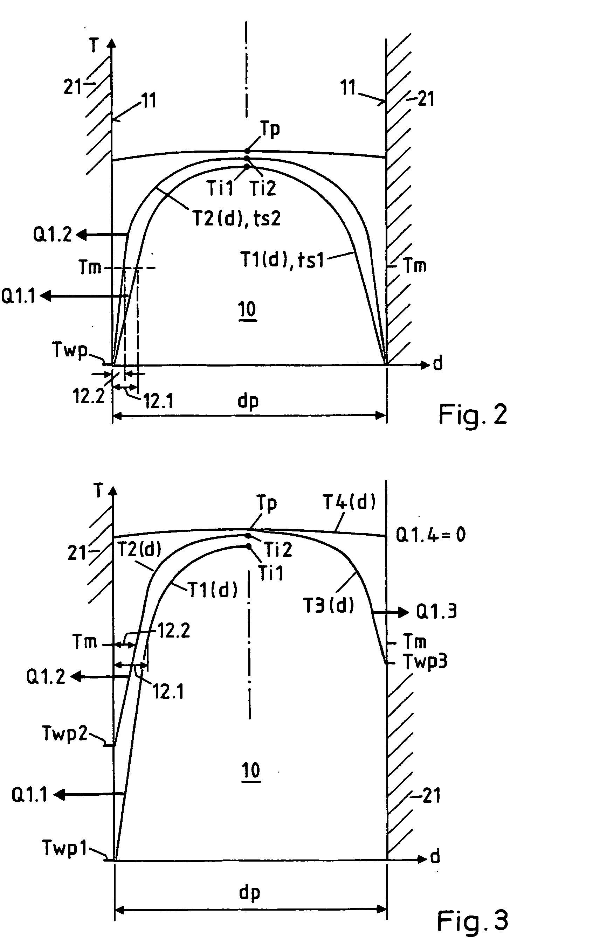

Die folgenden Fig. 2, 3 illustrieren schematisch unterschiedliche Einstellungen der Schockkühl-Parameter. Sie zeigen Temperaturverläufe in einem EF-Profil T(d) über die Schichtdicke dp hinweg nach ausgeführter Schockkühlung zur Zeit t = ts.

Fig. 2 zeigt zwei Temperaturverläufe T1(d), T2(d) für zwei verschiedene Schockkühlzeiten ts1, ts2, bei gleicher Werkzeugtemperatur Twp. Die längere Schockkühlzeit ts1 mit einem Wärmeübergang Q1.1 ergibt eine entsprechend stärkere, dickere Mantelschicht 12.1 (verfestigt unterhalb der Schmelztemperatur Tm) und die kürzere Schockkühlzeit ts2 mit einem kleineren Wärmeübergang Q1.2 ergibt eine dünnere Mantelschicht 12.2.

Fig. 3 zeigt verschiedene Temperaturverläufe T(d) bei konstanter Schockkühlzeit ts, jedoch bei verschiedenen Werkzeugtemperaturen Twp1, Twp2, Twp3 mit entsprechenden Wärmeübergängen Q und den resultierenden Mantelschichten 12, wobei die Intensität der Schockkühlung von T1 bis T4 abnimmt (siehe Fig. 4):
- T1: Twp1 =: starke Schockkühlung Q1.1 und Mantelschicht 12.1
- T2: Twp2 =: mittlere Schockkühlung Q1.2 und Mantelschicht 12.2
- T3: Twp3 =: schwache Schockkühlung Q1.3 und Mantelschicht 12.3
- T4:: kein Kontakt mit dem Werkzeug (offene Stellen, Aussparungen, Fig. 4), Q1.4 = 0, d.h. kein Wärmeübergang

Die Oberflächentemperaturen Ta des EF-Profils entsprechen dabei den Werkzeugtemperaturen Twp und die Temperaturen im Innern des Profils Ti liegen in der Nähe der Eingangstemperatur Tp des geheizten EF-Bandes. Vorzugsweise werden kurze Schockkühlzeiten ts und tiefe Werkzeugtemperaturen Twp gewählt. Die Schockkühlzeiten ts liegen vorzugsweise meistens zwischen 1 und 5 sec., oft bei ca. 2 - 4 sec., wobei in speziellen Fällen auch längere Zeiten z.B. bis 10 sec. möglich wären. Die Transferzeiten tt in die LFT-Presse liegen z.B. zwischen 5 und 20 sec.

Durch Einstellung der Parameter und damit der Temperaturführung wird die Schockkühlung auf die jeweiligen Anforderungen entsprechend eingestellt um:
- optimale Formfestigkeit für das Handling der EF-Profile und die gewünschte Endform des Profils nach dem Verpressen zu erreichen und
- optimale Verbindung zwischen EF-Profil und LFT-Masse (Verbundfestigkeit) zu erreichen.

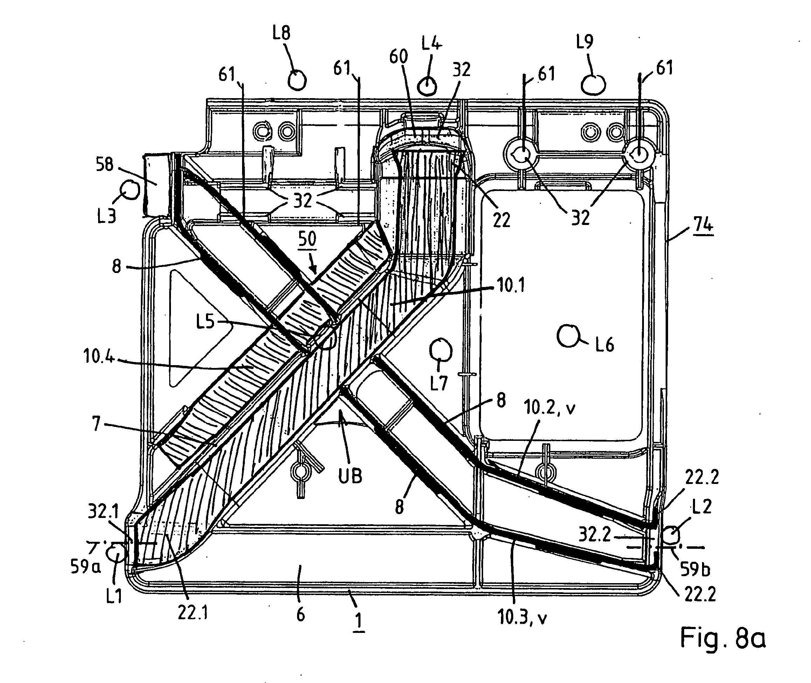

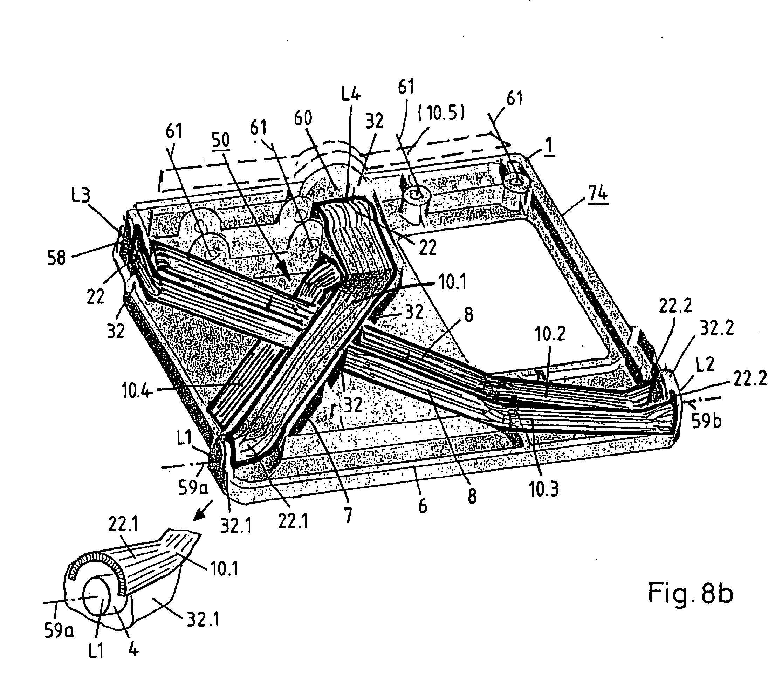

An ein EF-Profil können jedoch bereichsweise unterschiedliche Anforderungen gestellt sein (bezüglich der vorher genannten Kriterien a, b, c, d) entsprechend der Funktion des entsprechenden Teils oder der Seite oder des Bereichs eines EF-Profils. Beispielsweise an ein EF-Profil von Fig. 9a oder bei einem Bauteil von Fig. 8, vor allem auch in Bereichen von Kraftübertragungen und Krafteinleitungen.

Es ist ein sehr wichtiger Vorteil des erfindungsgemässen Schockkühlens und Profilformens, dass die Schockkühlung an den EF-Profilen bereichsweise unterschiedlich und je optimal eingestellt werden kann. Dies wird zu Fig. 4 erläutert. Diese zeigt schematisch verschiedene Bereiche mit unterschiedlicher Schockkühlung in Längsrichtung an einem EF-Profil 10, z.B. mit abnehmender Intensität der Schockkühlung von Q1.1 bis Q1.4 analog zum Beispiel von Fig. 3. Diese unterschiedlichen Bereiche am Profilwerkzeug 21 können dabei unterschiedliche Temperaturen Twp1, Twp2, Twp3 wie auch unterschiedliche Materialeigenschaften ae1, ae2, ae3 aufweisen. Wie in Fig. 4 dargestellt, können die beiden Seiten des EF-Profils oben und unten mit den entsprechenden Profilwerkzeugteilen 210 und 21u auch unterschiedlich schockgekühlt sein. Die unterschiedlichen Bereiche am Werkzeug 21 können durch thermische Konditionierung (heizen, kühlen) und die Werkzeugtemperatur Twp sowie durch die Materialeigenschaften ae, d.h. metallische Werkstoffe und allfällige lokale isolierende Beschichtungen, erreicht werden.

Folgende Materialien eignen sich für das erfindungsgemässe Verfahren: Die LFT-Masse 6 weist vorzugsweise mindestens 3 mm mittlere Faserlänge auf, noch bessere mechanische Eigenschaften werden mit grösseren Faserlängen von z.B. 5-15 mm erreicht. Die Endlosfaserverstärkung (EF) kann aus Glas-, Kohle oder Aramidfasern bestehen (wobei in Spezialfällen auch Borfasern für höchste Druckfestigkeiten oder Stahlfasern nicht ausgeschlossen wären).

Die EF-Profile 10 können z.B. hauptsächlich aus DU(unidirektionalen)-Lagen (0°) oder Endlosfaser-Strängen verschiedener Art bestehen, aber auch aus Lagen mit unterschiedlicher Faserausrichtung aufgebaut sein, z.B. abwechselnd mit Lagen von 0°/90° oder 0°/+45°/-45° Faserorientierungen. Sie können auch eine dünne Oberflächenschicht (z.B. 0.1 - 0.2 mm) aus reinem Thermoplastmaterial ohne EF-Faserverstärkung aufweisen.

Das erfindungsgemässe Schockkühlverfahren eignet sich besonders gut für kristalline Materialien unter Ausnützung der Kristallisationseigenschaften. Speziell geeignet für Strukturbauteile sind kristalline bzw. teilkristalline Polymere als Matrix von EF-Profilen 10 und von LF-Masse 6, so auch weil diese höhere Druckfestigkeiten erreichen können. Es können aber auch amorphe Polymere wie ABS oder PC eingesetzt werden. Das kristalline Thermoplastmaterial kann z.B. aus Polypropylen (PP), Polyethylentherephtalat (PET), Polybutylentherephtalat (PBT) oder Polyamid (PA) und weiteren bestehen. Im folgenden wird das kristalline Verhalten und die Schockkühlung am Beispiel von Polypropylen PP weiter erläutert und dessen Anwendung im erfindungsgemässen Verfahren.

Dazu wird in Fig. 5a ein Enthalpie-Diagramm von PP beispielsweise dargestellt, d.h. die Enthalpie in Funktion der Temperatur En(T). Beim Aufschmelzen oder Aufheizen gemäss Kurve a steigt die Enthalpie vor dem Schmelzpunkt Tm von ca. 165° C stark an, bedingt durch das Schmelzen der kristallinen Bereiche. Bei anschliessender langsamer Abkühlung gemäss Kurve b bleibt das Polymer bis zu einer unteren Erstarrungstemperatur Tu von ca. 125° C amorph geschmolzen und die Enthalpie sinkt erst unterhalb Tu im Temperaturbereich des Kristallwachstums DTkr von ca. 70 -125°C stark ab (das Kristallwachstum im Bereich DTkr wird durch die Kurve kr gezeigt). Dazwischen liegt der Hysterese-Bereich DEn, welcher der latenten Wärme der Kristallisation entspricht. Der schockartigen, sehr raschen Abkühlung entspricht die Gerade c. Dabei bleibt das Polymer auch unterhalb der Temperatur Tu amorph, wird aber verfestigt. Beim Wiedererwärmen kann diese latente Energie DEn genutzt werden, d.h. es ist eine sehr rasche Erwärmung möglich entsprechend der Geraden c.

### Es werden folgende Verfahrensschritte S1 - S4 ausgeführt:

- S1: Schockkühlen (ts)
- S2: Transfer in die LFT-Presse (tt)
- S3: anfängliches Wieder-Erhitzen der Profiloberflächenschicht (11) beim LFT-Verpressen und
- S4: anschliessendes Abkühlen beim LFT-Verpressen (S4.1) und nach dem Verpressen (S4.2)

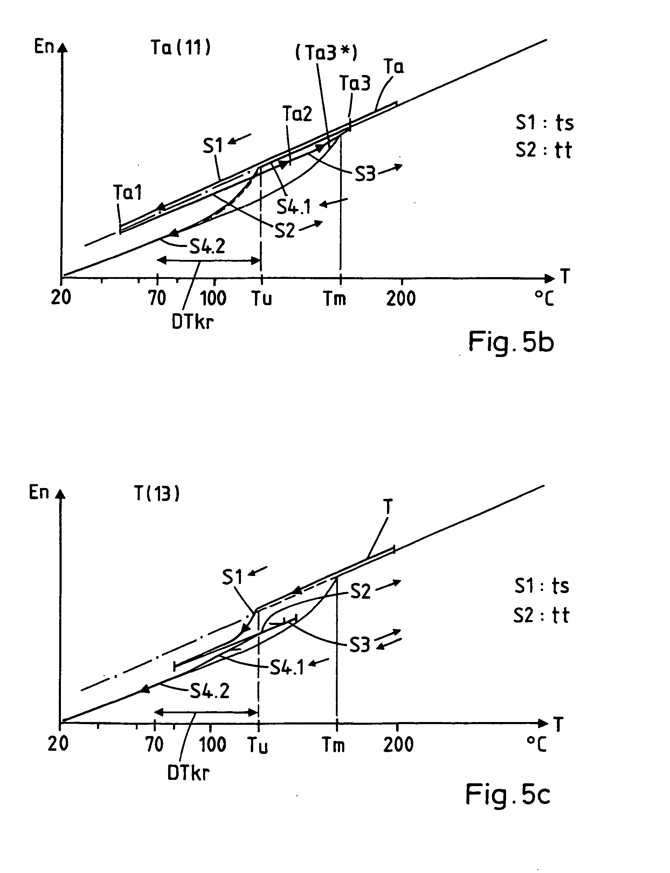

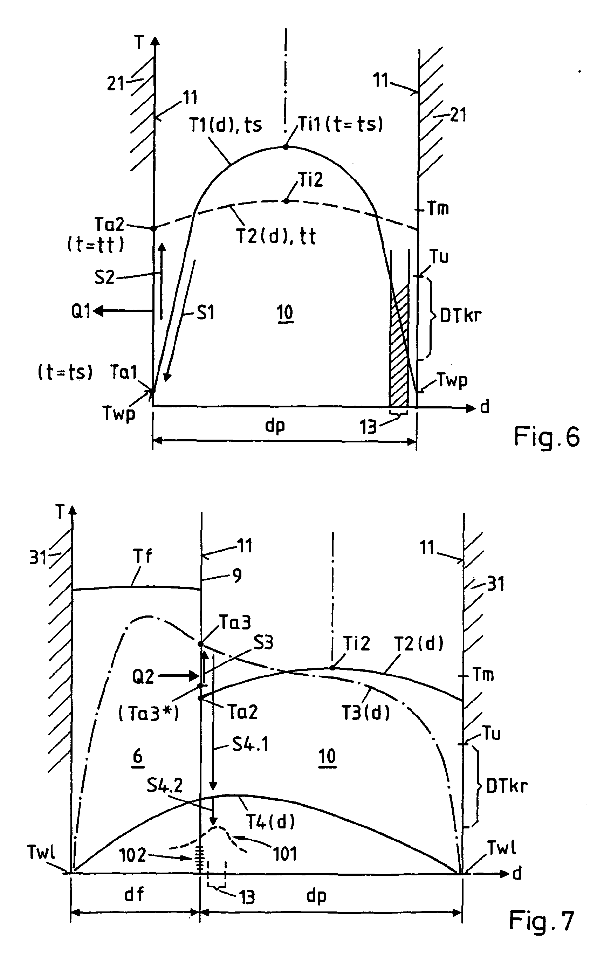

Diese Verfahrensschritte werden zu den Fig. 5b, 5c, 6 und 7 weiter erläutert. Die Fig. 5b und 5c zeigen die Temperaturführung an der Oberfläche 11 bzw. in einer Unterschicht 13 und die Fig. 6 und 7 illustrieren den Temperaturverlauf T(d) im EF-Profil 10 bzw. in EF-Profil und LFT-Masse 6 beim Verpressen.

Fig. 5b illustriert eine Temperaturführung an der Oberfläche 11 bzw. in einer Oberflächenschicht Ta(11) beim Schockkühlen im Enthalpie-Diagramm, in Zusammenhang mit den Fig. 6 und 7. Beim Schockkühlen wird die Oberfläche 11 des Profils innerhalb der Schockkühlzeit ts sehr rasch bis zur Temperatur Ta1 abgesenkt (Schritt S1). Anschliessend erfolgt während der Transferzeit tt ein Temperaturausgleich mit einem raschen Wiederanstieg der Oberflächentemperatur auf eine Temperatur Ta2 (Schritt S2), welche deutlich unter dem Schmelzpunkt Tm liegt. Beim anschliessenden Verpressen mit der flüssigen LFT-Masse 6 wird die Profiloberfläche 11 zuerst weiter aufgeheizt auf eine Temperatur Ta3 (Schritt S3), welche über dem Schmelzpunkt Tm liegt, und dabei vollständig mit der LFT-Masse verschmolzen. Anschliessend erfolgt im Schritt S4 eine langsame Abkühlung, zuerst noch beim Verpressen (S4.1) und dann nach der Entnahme aus der LFT-Presse (S4.2), wobei ein weiteres Auskristallisieren im Temperaturbereich DTkr erfolgt. Eine ausreichend gute Interfaceverbindung und Verschmelzung EF-LFT kann jedoch auch noch bei stärkerer Schockkühlung mit einer tieferen Oberflächentemperatur Ta3* (nach Schritt S3), welche deutlich über Tu, jedoch leicht unter Tm liegt, erreicht werden.

Die Fig. 5c illustriert die Temperaturführung bzw. den Temperaturverlauf T(13) in einer Unterschicht 13 unterhalb der Oberfläche 11 der EF-Profile (z.B. in 0.1 - 0.4 mm Tiefe), in welcher eine hohe Kristallisation durch langsame Temperaturführung im Kristallisations-Temperaturbereich DTkr zur erhöhten Formfestigkeit erzeugt wird. Beim Schockkühlen (S1) erfolgt eine starke Kristallisation in der Unterschicht 13. Beim Temperaturausgleich (Schritt S2) in der Transferzeit tt und anfänglich auch beim Verpressen (S3) erfolgt ein Aufwärmen, wobei die Temperatur jedoch unter der Schmelztemperatur Tm gehalten wird, so dass die Kristallisation erhalten bleibt. Diese Temperaturänderungen in der Unterschicht 13 erfolgen langsamer als an der Oberfläche (Fig. 5b).
Beim Abkühlen (S4) erfolgt ein weiteres Auskristallisieren. Durch stärkere oder schwächere Ausbildung dieser kristallisierten Zone in der Unterschicht 13 kann der gewünschte Grad von Formstabilität für Transfer, Positionierung und Verpressung eingestellt werden.

Die Fig. 6 zeigt den Temperaturverlauf T1(d) mit einer Oberflächentemperatur Ta1 im EF-Profil 10 nach der Schockkühlung zur Zeit t = ts (Schritt S1). Nach dem Transfer in die LFT-Presse (Schritt S2) wird rasch ein ausgeglichener Temperaturverlauf T2(d) mit einer erreichten Oberflächentemperatur Ta2 nach einer Transferzeit t = tt. Der Kristallisationstemperaturbereich DTkr (ca. 70 -125°C), in welchem das Kristallwachstum erfolgt (kr in Fig. 5a), ist ebenfalls angegeben.

Die Fig. 7 zeigt den Temperaturverlauf im EF-Profil 10 und der anliegenden LFT-Schicht 6 (mit einer Dicke df) beim Verpressen in der LFT-Presse. Mit dem Verpressen wird zuerst die Wärmemenge Q2 von der heissen LFT-Schicht 6 mit einer Temperatur Tf auf das EF-Profil 10 übertragen (Schritt S3). Dabei entsteht ein Temperaturverlauf T3(d), wobei die Temperatur Ta3 an der Profiloberfläche 11 und am Interface 9 rasch stark ansteigt und damit eine einwandfreie Verschmelzung und Verbundfestigkeit erreicht wird. Anschliessend sinkt die Temperatur T4(d) im Schritt S4 entsprechend der LFT-Werkzeugtemperatur Tw1 wieder ab. Beim Verpressen von EF-Profilen 10 mit der LFT-Masse 6 und dem anschliessenden Abkühlen zuerst im LFT-Werkzeug (S4.1) und dann nach der Entnahme (S4.2) kann die Temperaturführung so gewählt werden, dass der kristalline Anteil (am gewünschten Ort) erhöht wird durch entsprechend langsameres Durchlaufen des Kristallwachstum-Temperaturbereichs DTkr.

In Analogie zur bereichsweisen unterschiedlichen thermischen Konditionierung im Profilwerkzeug 21 kann auch das LFT-Werkzeug 31 bereichsweise unterschiedliche thermische Konditionierungen bzw. Wärmeübergänge aufweisen, d.h. unterschiedliche Parameter: Werkzeugtemperaturen Tw1 und Wärmeeindringkoeffzienten ae in verschieden Bereichen des LFT-Werkzeugs.

Nach der Entnahme aus dem LFT-Werkzeug und nach dem Auskühlen der Strukturbauteile können leichte Formänderungen auftreten, bedingt durch unterschiedliche Ausdehnungskoeffizienten von EF-Profilen und LFT-Masse und durch Materialschwindung. Diese Formänderungen können beeinflusst bzw. kompensiert werden durch stellenweise verschiedene Temperaturführung beim Abkühlen, durch analoge thermische Nachbehandlung oder auch durch entsprechende die Formänderung kompensierende Formgebungen der Werkzeuge (Vorformen in Gegenrichtung).

Bei teilkristallinen Polymeren wie PP kann die Temperaturführung so gewählt werden, dass die Kristallisationseigenschaften zur Verbesserung von Formfestigkeit und Verbundfestigkeit genutzt werden. Zum Beispiel:
- In der Mantelschicht 12 bzw. in der Unterschicht 13 kann im Kristallisations-Temperaturbereich DTkr die Festigkeit des Mantelbereichs erhöht werden.
- An der Profiloberfläche 11 kann ein nur minimales Kristallwachstum erreicht werden, wenn die Oberflächentemperatur Ta in Schritt S1 und Schritt S2 sehr rasch über den Kristallwachstumsbereich DTkr hindurch geführt wird und die Profiloberfläche beim Verpressen rasch und möglichst vollständig aufgeschmolzen und mit der LFT-Masse verbunden wird (durch Q2).
- Die Formfestigkeit wird erhöht durch einen stärkeren kristallinen Anteil in der Mantelschicht bzw. in der Unterschicht 13
- und je nach gewünschter weiterer Formbarkeit beim LFT-Pressen wird ein kleinerer oder grösserer kristalliner Anteil in der Mantelschicht bzw. in der Unterschicht 13 erzeugt.

Ein Temperaturgradient am Interface 9 bzw. an der Kontaktfläche EF-LFT kann durch gerichtetes Kristallwachstum über das Interface hinweg die Festigkeit der Verbindung EF-LFT weiter erhöhen.

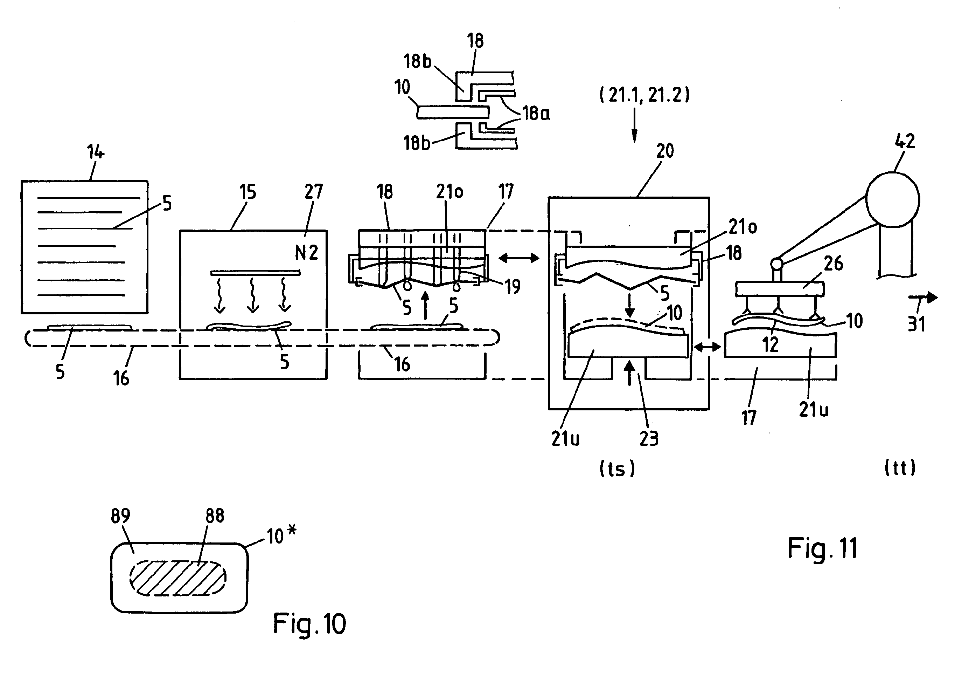

Die Fig. 8a, 8b, 8c illustrieren mögliche Formgebungen der EF-Profile entsprechend den unterschiedlichen Funktionen und Anforderungen an verschiedene Stellen eines bestimmten EF-Profils bzw. Strukturbauteils, insbesondere zur Aufnahme äusserer Lasten. Dazu können die EF-Profile eine dreidimensionale Profilformgebung aufweisen, welche in genau definierter Position in das Strukturbauteil integriert werden. Sie können in Längsrichtung Biegungen, Drehungen oder Faltungen aufweisen und sie können spezielle Ausformungen 22 für Kraftübergänge auf die LFT-Masse und zur direkten Aufnahme von äusseren Lasten bzw. zur Aufnahme von Inserts 4 (Einbauteilen) aufweisen, an welchen äussere Lasten in das Bauteil eingeleitet werden. Auf die Formgebung der EF-Profile 10 abgestimmt wird auch die Formgebung der umgebenden LFT-Masse 6 gewählt. Formgebungen von Kraftübertragungen (von Kräften und Momenten) im Innern eines Bauteils (z.B. von einem EF-Profil über die LFT-Masse auf andere EF-Profile) können sowohl als Ausformungen 22 der EF-Profile als auch als Ausformungen 32 der LFT-Masse gebildet sein.
Generell werden möglichst ausgeglichene, stetige Übergänge ausgebildet zur Reduktion von Festigkeits- und Steifigkeitssprüngen zwischen EF-Profilen und LFT-Masse.
Die dreidimensionale Formgebung der EF-Profile wird z.B. realisiert durch eine Vorformung der geschmolzenen EF-Bänder 5 in der Horizontalebene durch den Bandgreifer 18 und durch Vorformelemente 19 beim Transfer in die EF-Profil-Formstation 20 (siehe Fig. 11). Dabei können die EF-Bänder 5 auch verdreht werden. Anschliessend erfolgt die Verformung auch in der dritten Dimension (vertikal) durch das Profilwerkzeug 21, so dass weitgehend beliebig dreidimensional geformte EF-Profile erzeugt werden können.

Die Fig. 8a, b zeigen das Beispiel eines komplexen Strukturbauteils in Form einer 2/3 Rücksitzlehne 74 mit einer Mittelgurtanbindung 60 für den mittleren Sitzplatz eines Fahrzeugs mit mehreren anspruchsvollen Lasteinleitungen für verschiedene Lastfälle (Crash-Lasten). Die Fig. 8a zeigt im Grundriss die Anordnung der EF-Profile im Bauteil und Fig. 8b perspektivisch die LFT-Masse 6 und darin eingezeichnet die integrierten EF-Profile 10.1 bis 10.4. Dieses Beispiel illustriert die lastoptimierte Formgebung der EF-Profile selber sowie die lastoptimierte Anordnung in genau definierter Position im Bauteil zu einer Struktur mit entsprechender Formgebung der LFT-Masse 6 und mit optimaler Verbindungsfestigkeit zwischen den Hauptlasten tragenden EF-Profilen (mit gerichteten Endlosfasern) und der ergänzenden LFT-Masse (mit ungerichteten Langfasern).

Hier ergeben sich vier Hauptlastaufnahmen L1 bis L4 durch:
- die Lasten L1, L2 an den beidseitigen Achshalterungen 59a, 59b, um welche die Rücksitzlehne schwenkbar ist,
- die Last L3 am Schloss 58, zum Fixieren der Rücksitzlehne in Normalstellung und
- die Last L4 an Gurtschloss bzw. Gurtrolle 60 für den Mittelgurt des mittleren Sitzplatzes.

Mit diesem Strukturbauteil werden folgende Lastfälle (mit den weiteren Lasten L5 bis L9) abgedeckt:
- Front- und Heckaufprall
- Ladegut-Sicherung
- Gurtverankerung
- Kopfstützenverankerung

Zur Aufnahme und Übertragung aller Lasten und Kräfte bilden die sich kreuzenden EF-Profile zusammen mit den verbindenden kraftübertragenden Ausformungen der LFT-Masse eine räumliche, dreidimensionale Kreuzungsstruktur 50. Hier bilden die EF-Profile je paarweise in den LFT-Ausformungen einen Momente übertragenden Biegeträger:
- Die EF-Profile 10.1 und 10.4 in einer Sicke 7 der LFT-Masse einen Biegeträger zwischen den Lasten L1 und L4
- und die EF-Profile 10.2 und 10.3 in den Rippen 8 der LFT-Masse einen Biegeträger zwischen den Lasten L2 und L3.

Über die räumliche Kreuzungsstelle 50 wird dabei die Last L4 an der Gurtrolle und zum Teil auch weitere Lasten, die auf den Biegeträger 10.1/ 10.4 wirken, auch durch den anderen Biegeträger 10.2/10.3 abgestützt (und umgekehrt).

Die Hauptkräfte bzw. Lasten L1 bis L4 werden durch Krafteinleitungen aufgenommen:
- durch Ausformungen 22 und 32 der EF-Profilenden und der LFT-Masse zur Aufnahme der äusseren Kräfte mit oder ohne Inserts 4.
- Dabei können die Inserts 4 vor dem Verpressen in das LFT-Werkzeug eingelegt und mit den EF-Profilen und der LFT-Masse zusammen verpresst werden
- oder sie können auch nachträglich in das Bauteil eingefügt werden.

Hier weist das EF-Profil 10.1 eine bogenförmige Verbreiterung 22.1 zur Aufnahme eines Inserts 4 beim Achslager 59a auf. Die andere Achslager-Aufnahme 59b wird durch Ausformungen 22.2 der EF-Profile 10.2 und 10.3 und angepasste verbindende Ausformungen 32.2 der LFT-Masse gebildet. Diese Profilenden 22.2 sind umgebogen und so in der LFT-Masse verankert zur Erhöhung der Zugfestigkeit. Das Schloss 58 wird an eine Schlossplatte am EF-Profil 10.3 angeschraubt und durch das EF-Profil 10.2 gestützt. Die Gurtrolle 60 wird abgestützt durch Ausformungen 22 der EF-Profile 10.1 und 10.4 und durch LFT-Ausformungen 32.

Die kleineren Lasten L8, L9 von Kopfstützen 61 werden hier durch LFT-Ausformungen 32 aufgenommen. Es könnte aber auch ein zusätzliches quer verlegtes EF-Profil 10.5 (bereichsweise flach und vertikal ausgerichtet) zur Verstärkung integriert werden.

In diesem Beispiel ist auch die dreidimensionale Profilformung in vielen Varianten ersichtlich.

Die Ablagereihenfolge der EF-Profile in das LFT-Werkzeug ist:
zuerst das EF-Profil 10.1, darauf die EF-Profile 10.2 und 10.3 und anschliessend darauf das EF-Profil 10.4. Dann wird die flüssige LFT-Masse 6 eingebracht und das ganze Bauteil einschalig und einstückig in einem Schritt verpresst. Um möglichst kurze Transferzeiten tt zu erreichen, können mehrere oder alle EF-Profile (10.1 - 10.4) mit einem Mehrfachgreifer 26 oder Roboter erfasst, relativ zueinander richtig vorpositioniert werden während dem Transfer und zusammen in einem Schritt ins LFT-Werkzeug 31 eingelegt werden.

Beim Formpressen der EF-Profile können auch mehrere Profile in einem Profilwerkzeug 21 mit einer Profil-Formstation geformt werden, z.B. hier die EF-Profile 10.2 und 10.3.

Das Profilformen in der EF-Profil-Formstation 20 kann für besonders komplizierte Formen auch mittels eines mehrteiligen Profilwerkzeugs in einem mehrstufigen Formprozess ausgeführt werden. Ein Beispiel dazu zeigt Fig. 8c mit einem dreiteiligen Werkzeug 21u, 21o und 21.3. In einem zweistufigen Formprozess werden hier zuerst die Werkzeugteile 21o und 21u geschlossen und dann sofort seitlich auch der Werkzeugteil 21.3. So kann ein 90° oder 180°-Bogen geformt werden - z.B. für Krafteinleitungsbereiche.

Die Fig. 9a, 9b illustrieren ein Beispiel eines EF-Profils 10, das über seine Länge unterschiedliche Querschnittsformen aufweist, in Anpassung an die zu übertragenden Kräfte und zur optimalen Verbindung mit der LFT-Masse 6. Die Figuren zeigen im Querschnitt ein EF-Profil 10a, 10b in einer Rippe 8, z.B. entsprechend den Profilen 10.2 oder 10.3 von Fig. 8, an zwei verschiedenen Stellen.

Fig. 9a zeigt eine Formgebung 10a mit einem Positionierabsatz 55 zum Fixieren und Halten des EF-Profils in der gewünschten Lage - speziell beim Verpressen, wenn die flüssige LFT-Masse in die Rippe hinein gepresst wird. Oben und unten weist das EF-Profil je einen dickeren Bereich 56 als Zug- und Druckzonen (in Faserlängsrichtung) zur Übertragung von Momenten auf. Dazwischen liegt eine dünnere Schubzone 57 mit entsprechend dickerer anliegender LFT-Schicht 6 und mit grosser Anbindungsfläche und besonders starker Interface-Verbindung.
Dabei wird die Schubfestigkeit erhöht durch die anliegende LFT-Schicht 6 mit isotroper Faserverteilung (während die Festigkeit quer zur Faserrichtung in den EF-Profilen 10 hier tiefer liegt).

An einer anderen Stelle gemäss Fig. 9b ist der Profilquerschnitt 10b den dortigen Kraftverhältnissen entsprechend verändert: gestreckt, d.h. höher und schmaler und ohne Positionierabsatz.
Zur sicheren und genauen Positionierung und Fixierung der EF-Profile, auch während dem Verpressen mit der LFT-Masse, können weitere Positionierstellen 54 an den EF-Profilen ausgebildet sein, welche den Ausformungen des LFT-Werkzeugs 310 (oben) und 31u (unten) entsprechen. Hier dient die Positionierstelle 54 der genauen Fixierung unten in der Rippe 8. Positionierstellen können auch in Längsrichtung der EF-Profile passend verteilt angeordnet werden.
In analoger Weise können solche Profilformen auch an Sickenwänden positioniert und fixiert sein statt in Rippen 8.
Anstelle der Beispiele 8a, 9a können die Querschnitte von EF-Profilen je nach Anwendung auch "L"- oder "Z"-förmig ausgebildet sein.

Zusätzlich zu den schockgekühlten EF-Profilen können auch weitere geformte EF-Profile, welche jedoch separat und thermisch invers behandelt sind (d.h. innen fest, aussen flüssig), zum formfesten Transfer ins LFT-Werkzeug gebracht und in einem Schritt zusammen mit den schockgekühlten EF-Profilen verpresst werden. Als Beispiel kann das EF-Profil 10* gemäss Fig. 10 durch äusseres Aufheizen einen geschmolzenen Aussenbereich 89 und einen noch formfesten kühleren Innenbereich 88 aufweisen. Für Handling und Transfer kann dieses EF-Profil 10* z.B. mittels kalten Greifern an (dadurch gekühlten) nicht klebenden Kontaktstellen kurze Zeit gehalten werden.

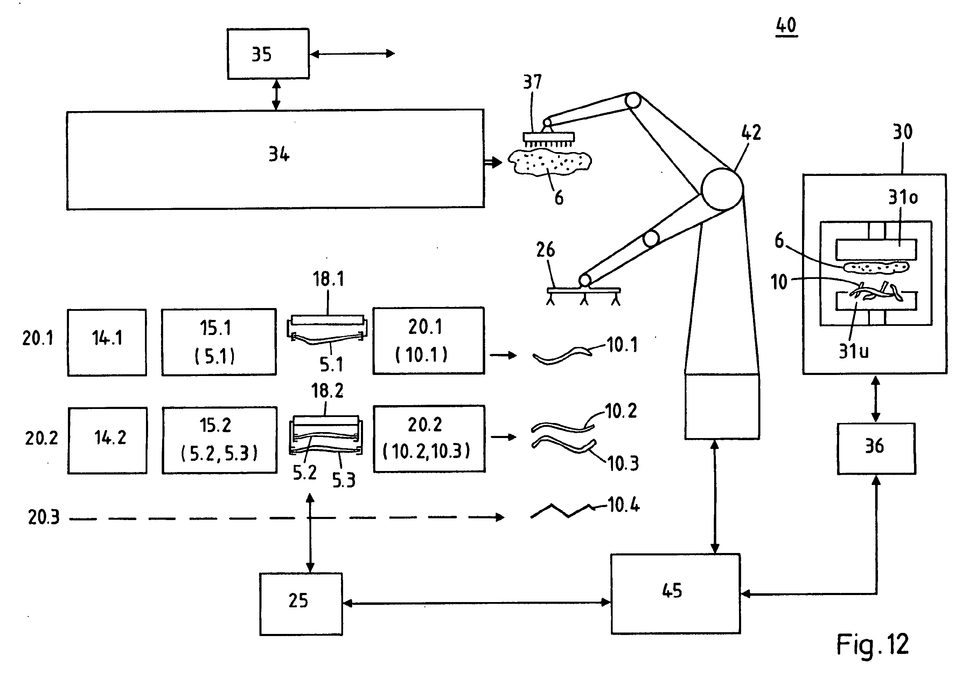

Die Fig. 11 und 12 zeigen Beispiele einer EF-Profil-Herstelllinie bzw. einer Anlage zur Ausführung des erfindungsgemässen Verfahrens. Die Fig. 11 zeigt ein Beispiel einer EF-Profil-Herstelllinie mit einer EF-Profil-Formstation 20, mit einem Halbzeuglager 14, einer Aufheizstation 15, mit einer Schutzgasatmosphäre 27 (z.B. mit N2 für kritische Materialien und Temperaturen), einem Transportband oder einer Transportkette 16 (z.B. einer Stabkette mit nichthaftender Beschichtung und einer Bürstenreinigung), einem Bandgreifer 18 mit Vorform-Elementen 19, welche am oberen EF-Profil-Werkzeug 210 angebracht sind, eine EF-Profil-Formstation 20 mit Schockkühlung, mit einem Verschiebeportal 17 für den oberen Werkzeugteil 21o und mit einer EF-Profil-Presse 23. Mit einem Profilgreifer 26 und einem Transferroboter bzw. einer Handling-Einheit 42 werden die erzeugten EF-Profile in das Werkzeug 31 einer LFT-Presse 30 transferiert und genau positioniert. Vom Halbzeuglager 14 werden die EF-Bänder 5 mit geeignetem Zuschnitt (auch mit variierender Länge, Breite und Dicke) mit der Transportkette 16 in die Aufheizstation 15 gebracht und dort z.B. mit IR-Strahlern vollständig aufgeschmolzen und auf eine homogene gewünschte Bandtemperatur Tp0 erhitzt.

Anschliessend werden die geschmolzenen EF-Bänder 5 von einem Bandgreifer 18 mit Vorform-Elementen 19, welche am oberen Werkzeugteil 21o angebracht sind, erfasst und während des Transfers in die EF-Profil-Formstation 20 vorgeformt (vorgeformt in der horizontalen Ebene, z.B. durch Positionierstifte mit Verbiegen oder Drehen des geschmolzenen Bandes), mit dem Verschiebeportal 17 über das untere Profil-Formwerkzeug 21u verschoben, dort in der gewünschten vorgeformten Lage abgelegt und sofort verpresst in der genau definierten, einstellbaren Schockkühlzeit ts zur Bildung der formfesten Mantelschicht 12. Durch die Verformung im Profilwerkzeug wird die gewünschte, definierte dreidimensionale Form des EF-Profils erreicht. Anschliessend werden die EF-Profile 10 sofort entformt und mit dem Profilgreifer 26 durch den Roboter 42 in das LFT-Werkzeug 31 der LFT-Presse 30 transferiert und genau positioniert. Mit dem Profilgreifer 26 werden die EF-Profile 10 während des Transfers in der Luft in die gewünschte Soll-Lage ausgerichtet, d.h. bezüglich Translation, Rotation und Neigung, in die definierte Position für jedes einzelne EF-Profil. Mit einem Profilgreifer 26 bzw. einem Roboter können die Profile einzeln erfasst und transferiert werden oder auch mehrere Profile gleichzeitig erfasst und simultan je in die richtige Position ausgerichtet und zusammen abgelegt werden.

Im Beispiel von Fig. 8 wird z.B. zuerst das Profil 10.1, darauf zusammen die EF-Profile 10.2 und 10.3 vertikal je in einer Rippe und dann das EF-Profil 10.4 in einer Sicke positioniert, wobei auch diese vier Profile mit einem Mehrfach-Profilgreifer 26 gleichzeitig transferiert und positioniert werden können.

Um zu vermeiden, dass die geschmolzenen EF-Bänder 5 am Bandgreifer 18 und an den Vorform-Elementen 19 kleben bleiben, können die Bänder durch kurzen Kontakt mit kalten Greiferflächen, welche nicht kleben, abgelöst werden. Ein solcher Doppelgreifer 18a, 18b weist z.B. zwei isolierende kleine Greiferkontakte 18a und zwei stärkere, kalte, nicht klebende Greiferkontakte 18b auf.

In einer EF-Profil-Formstation 20 können mit mehr als einem Profilwerkzeug 21.1, 21.2 gleichzeitig auch mehrere EF-Profile 10 verpresst werden.

Fig. 12 zeigt eine ganze Anlage 40 mit mehreren EF-Profil-Herstelllinien mit EF-Profil-Formstationen 20.1, 20.2, 20.3 sowie mit einer LFT-Aufbereitungseinrichtung 34, z.B. einem Extruder, und einem LFT-Greifer 37 zum Transferieren der geschmolzenen LFT-Masse 6 mit der gewünschten Temperatur in die LFT-Presse 30 bzw. in das LFT-Werkzeug 31. Die Anlage weist Teilsteuerungen der einzelnen Baugruppen auf: eine Steuerung 25 der EF-Profil-Formstationen, eine Steuerung 35 der LFT-Aufbereitung und eine LFT-Pressensteuerung 36 , welche in der Anlagensteuerung 45 inklusive der Steuerung für den Transferroboter 42 zusammengefasst werden kann.

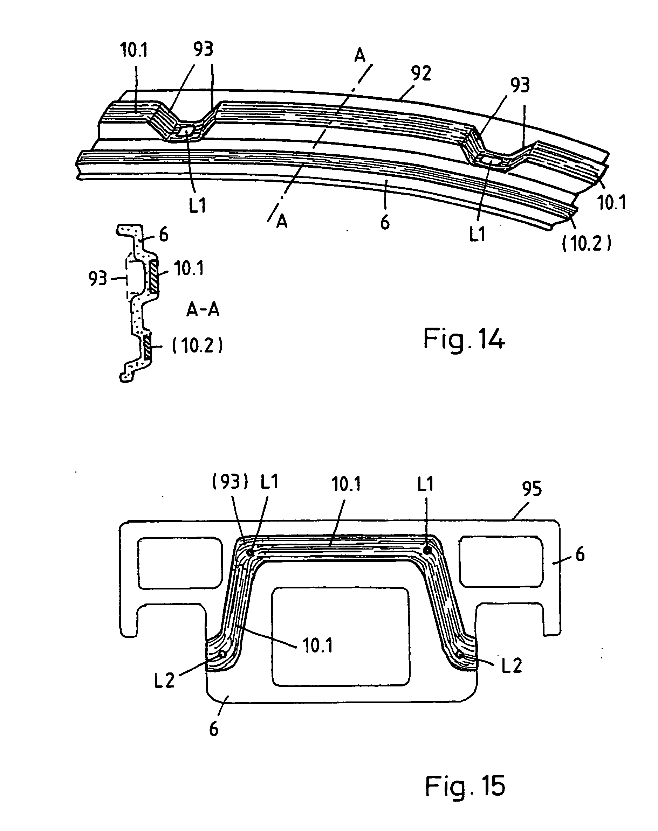

Fig. 13 illustriert die genau definierte Positionierung von mehreren EF-Profilen (10.1 - 10.4) in unterschiedlichen Einbaulagen und mit beliebigen Neigungen zwischen flach und senkrecht in einem LFT-Werkzeug. Dabei können die einzelnen EF-Profile am unteren Werkzeug 31u und/oder auch am oberen Werkzeug 31o positioniert und mit geeigneten Fixierelementen 38 fixiert sein. Mit der dazwischen eingebrachten LFT-Masse 6 können somit entsprechend auch Bauteile mit aufwendigeren EF-Profil-Verstärkungsstrukturen in einem Schritt hergestellt werden.

Die LFT-Masse 6 kann auch mit anderen analogen Druckherstellverfahren anstelle des Fliesspressens eingebracht und verpresst werden. So können auch LFT-Einspritzverfahren mit horizontalem Verpressen und vertikalem LFT-Werkzeug eingesetzt werden. Als besonders geeignet kann auch ein Spritzgiess-Verfahren mit Hinterpressen im Quellfluss mit einem bewegten Werkzeug mit Tauchkanten eingesetzt werden, wo das Werkzeug beim Einspritzen zuerst langsam geöffnet und dann zusammengepresst wird. Es kann aber auch ein horizontales Verpressen mit einem vertikalen LFT-Werkzeug ausgeführt werden. Vertikales Einspritzen und Verpressen mit einem horizontalen LFT-Werkzeug ist auch möglich.

Erfindungsgemässe Strukturbauteile enthalten ein oder mehrere integrierte schockgekühlte EF-Profile 10, welche eine genau definierte Formgebung und eine genau definierte Position bzw. Lage in der LFT-Masse 6 und damit im Strukturbauteil aufweisen, so dass aufzunehmende äussere Lasten optimal getragen und abgestützt werden können. Die erfindungsgemässe Herstellung im Schockkühlverfahren kann an fertigen Strukturbauteilen nachgewiesen werden, z.B. durch formliche Abzeichnungen an den EF-Profilen, die von Handlingelementen bei der Herstellung erzeugt wurden, durch leichte Abrundungen von Kanten an den EF-Profilen und durch ausgeglichene formliche Übergänge zwischen EF-Profilen und LFT-Masse.

Bei den bevorzugten kristallinen Thermoplastmaterialien wird an den EF-Profilen 10 vorzugsweise im Bereich einer Unterschicht 13 (von z.B. 0.2 - 0.4 mm Dicke) unterhalb der Profiloberfläche 11 eine erhöhte Kristallisation 101 erzeugt (siehe Fig. 7). An den Kontaktflächen 9 zwischen EF-Profilen 10 und LFT-Masse 6 wird vorzugsweise eine gerichtete Kristallisation 102 über die Kontaktfläche hinweg erzeugt. Dies ergibt auch verbesserte mechanische Eigenschaften und eine verbesserte Zeitstabilität der Strukturbauteile mit schockgekühlten EF-Profilen.

Erfindungsgemässe leichte, lasttragende Strukturbauteile mit integrierten schockgekühlten EF-Profilen können in einem weiten Bereich von Anwendungen eingesetzt werden, z.B. im Fahrzeugbau für Bauteile wie Chassisteile, Türen, Sitzstrukturen, Heckklappen etc. Die Strukturbauteile können in einigen Anwendungen auch mit nur einem integrierten, passend geformten EF-Profil aufgebaut sein. Zwei Beispiele von Strukturbauteilen mit nur einem EF-Profil illustrieren die Fig. 14 und 15.

Fig. 14 zeigt einen Stossfängerträger 92 mit einem in der formgebenden LFT-Masse 6 integrierten EF-Profil 10.1, welches über die ganze Länge verläuft. An zwei Lastaufnahmestelle L1 ist der Stossfängerträger 92 mit dem Fahrzeugchassis verbunden. Das EF-Profil 10.1 ist hier "topfförmig" ausgebildet mit schrägen Flanken 93 und integriert in die LFT-Masse, wodurch gleichzeitig auch ein energieaufnehmendes Crashelement geschaffen wird. In einer anderen, verstärkten Variante könnte ergänzend auch ein zweites EF-Profil 10.2 auf einer Sicke unterhalb des EF-Profils 10.1 integriert werden.

Die Fig. 15 zeigt einen Montageträger (Frontend) 95 mit einem integrierten, beidseitig abgebogenen EF-Profil 10.1 mit vier Lastaufnahmestellen L1, L2, wo der Montageträger am Chassis befestigt ist. Je nach Bedarf kann das EF-Profil 10.1 auch an diesen Stellen L1, L2 eine Ausformung oder Vertiefung aufweisen, welche, integriert in der LFT-Masse, als Crashelement (93) plastisch deformierbar ist - analog zum Beispiel von Fig. 14.

Im Rahmen dieser Beschreibung werden folgende Bezeichnungen verwendet:
- 1: Strukturbauteil
- 1.2: zweiter Teil (zweischalig)
- 4: Inserts, Einlagen
- 5: EF-Bänder
- 6: LFT-Masse, Formmasse
- 7: Sicke
- 8: Rippe
- 9: Interface, Kontaktfläche EF-LFT
- 10: EF-Profile
- 11: Profiloberfläche, Oberflächenschicht
- 12: Mantelschicht
- 13: Unterschicht (unterhalb 11)
- 14: Halbzeuglager
- 15: Aufheizstation
- 16: Transportkette
- 17: Verschiebeportal
- 18: Bandgreifer
- 19: Vorform-Elemente
- 20: EF-Profil-Formstation (Schockkühlung)
- 21: Profilwerkzeug
- 21o, 21u: oberes, unteres
- 22: EF-Profil-Ausformungen
- 23: Profil-Presse
- 25: Steuerung von EF-Profil-Formstation

- 26: Profilgreifer
- 27: Schutzgas Atmosphäre
- 30: LFT-Presse
- 31: LFT-Werkzeug
- 31o, 31u: oberes, unteres
- 32: LFT-Ausformungen
- 34: LFT-Aufbereitung, Extruder
- 35: LFT-Steuerung von 34
- 36: LFT-Pressensteuerung
- 37: LFT-Greifer
- 38: Fixierelemente
- 40: Anlage
- 42: Transferroboter, Handlingeinheit
- 45: Anlagensteuerung
- 50: räumliche Kreuzungsstelle (dreidimensional)
- 54: Positionierstellen
- 55: Positionierabsatz
- 56: dicke Zug- und Druckzonen in 10
- 57: dünnere Schubzone
- 58: Schloss
- 59a, b: Achshalterungen
- 60: Gurtrolle, Gurtschloss
- 61: Kopfstützen
- 88: Innenbereich
- 89: Aussenbereich
- 92: S tossfängerträger
- 93: Crashelement
- 95: Montageträger, Frontend
- 101: erhöhte Kristallisation
- 102: gerichtete Kristallisation
- LFT: Langfaser-Thermoplast
- EF: Endlosfaser
- ae: Wärmeeindring-Koeffizient
- d: Richtung senkrecht zur Profiloberfläche 11
- dp: Profildicke
- df: Dicke der LFT-Schicht
- Q1: Wärmeübergang an 21
- Q2: Wärmeübergang von 6
- t: Zeiten
- ts: Schockkühlzeit
- tt: Transferzeit
- T: Temperaturen
- Ta: Oberflächentemperatur
- Ti: Temperatur im Inneren
- Twp: T von EF-Profilwerkzeug 21
- Tw1: T von LFT-Werkzeug 31
- Tf: T von LFT-Masse
- Tm: Schmelztemperatur
- Tp0: T von EF-Band 6
- Tp: Eingangstemperatur von EF-Profil 10
- Tu: untere Erstarrungstemperatur
- T1, T2: Profiltemperaturverläufe
- DTkr: Kristallisationstemperatur-Bereich
- kr: Kristallwachstum
- DEn: Hysteresebereich (Kristallisationswärme, latente Enthalpie)
- L: Lasten
- En: Enthalpie
- S1, S2, S3,: S4 Verfahrensschritte

## Patentansprüche

1. Verfahren zur Herstellung von strukturellen Bauteilen aus Langfaserthermoplast (LFT) mit integrierten Endlosfaser (EF)-Verstärkungen in einem einstufigen LFT-Druck-Herstellverfahren,
**dadurch gekennzeichnet dass**
- imprägnierte EF-Bänder (5) in einer Aufheizstation (15) aufgeschmolzen und anschliessend in ein zweiteiliges Profilwerkzeug (21) einer EF-Profil-Formstation (20) transferiert werden,
- dort kurzzeitig verpresst und dabei zum gewünschten EF-Profil (10) geformt werden und dass dabei an der Profiloberfläche (11) durch Kontakt mit dem
- thermisch konditionierten Profilwerkzeug (21) mit hohem Wärmeübergang (Q1)
- eine schockgekühlte, formstabile dünne Mantelschicht (12) gebildet wird,
- das EF-Profil nach definierter kurzer Schockkühlzeit (ts) sofort vollständig vom Profilwerkzeug getrennt und in ein LFT-Werkzeug (31) transferiert und dort definiert positioniert wird,
- dann eine geschmolzene LFT-Masse (6) eingebracht und mit dem EF-Profil (10) zusammen unter Druck gesetzt bzw. verpresst wird,
- so dass die Mantelschicht (12) an der Oberfläche (11) wieder aufgeschmolzen
- und mit der umgebenden LFT-Masse (6) thermoplastisch verschmolzen wird.

2. Verfahren nach Anspruch 1, **dadurch gekennzeichnet, dass** als LFT-Druck-Herstellverfahren ein LFT-Fliesspress-Verfahren mit vertikaler LFT-Presse (30) und horizontalem Presswerkzeug (31) eingesetzt wird.

3. Verfahren nach Anspruch 1, **dadurch gekennzeichnet, dass** als LFT-Druck-Herstellverfahren ein LFT-Einspritz-Verfahren eingesetzt wird.

4. Verfahren nach Anspruch 3, **dadurch gekennzeichnet, dass** ein LFT-Einspritz-Verfahren mit Hinterpressen im Quellfluss eingesetzt wird.

5. Verfahren nach Anspruch 1, **dadurch gekennzeichnet, dass** mehrere EF-Profile (10.1, 10.2, 10.3) im LFT-Werkzeug (31) positioniert und anschliessend mit der LFT-Masse (6) verpresst werden.

6. Verfahren nach Anspruch 1, **dadurch gekennzeichnet, dass** EF-Profile in mehr als einer EF-Profil-Fierstell Linie (20.1, 20.2) gleichzeitig erzeugt werden.

7. Verfahren nach Anspruch 1, **dadurch gekennzeichnet, dass** in einem Profilwerkzeug (21) mehr als ein EF-Profil (10.1, 10.2) erzeugt wird.

8. Verfahren nach Anspruch 1, **dadurch gekennzeichnet, dass** in einer EF-Profil-Formstation (20) mit mehr-als einem Profilwerkzeug (21.1, 21.2) gleichzeitig EF-Profile verpresst werden.

9. Verfahren nach Anspruch 1, **dadurch gekennzeichnet, dass** in der EF-Profil-Formstation ein mehrstufiger Profil-Formprozess mittels eines mehrteiligen Profilwerkzeugs (21u, 21o, 21.3) ausgeführt wird.

10. Verfahren nach Anspruch 1, **dadurch gekennzeichnet, dass** die EF-Bänder (5) in plastischem Zustand beim Transfer in das Profil-Werzeug (21) durch Vorform-Elemente (19) vorgeformt werden.

11. Verfahren nach Anspruch 1, **dadurch gekennzeichnet, dass** die EF-Profile (10) eine dreidimensionale Profilformung aufweisen.

12. Verfahren nach Anspruch 1, **dadurch gekennzeichnet, dass** die EF-Profile (10) in Längsrichtung eine Biegung, Drehung, Faltung und/oder eine Oberflächenstrukturierung und unterschiedliche Querschnittsformen aufweisen.

13. Verfahren nach Anspruch 1, **dadurch gekennzeichnet, dass** mit der Formgebung der Werkzeuge (21, 31) Ausformungen an den EF-Profilen (22) und LFT-Ausformungen (32) für Krafteinleitungen und Kraftübergänge zwischen den EF-Profilen (10) und der LFT-Masse (6) sowie zu Inserts (4) erzeugt werden.

14. Verfahren nach Anspruch 1, **dadurch gekennzeichnet, dass** ein EF-Profil mit einem Positionierabsatz (55), einem dicken Zug- und Druckbereich (56) oben und unten sowie einem dünneren Schubbereich (57) dazwischen geformt wird, welches in einer Rippe (8) oder einer Sicke (7) des Bauteils positioniert wird.

15. Verfahren nach Anspruch 1, **dadurch gekennzeichnet, dass** die Schockkühlzeit (ts) im Bereich von 1 bis 5 sec liegt.

16. Verfahren nach Anspruch 1, **dadurch gekennzeichnet, dass** die LFT-Masse (6) mindestens 3 mm mittlere Faserlänge aufweist.

17. Verfahren nach Anspruch 1, **dadurch gekennzeichnet, dass** das Thermoplastmaterial aus teilkristallinen Polymeren besteht.

18. Verfahren nach Anspruch 1, **dadurch gekennzeichnet, dass** das Thermoplastmaterial aus teilkristallinen Polymeren wie Polypropylen (PP), Polyethylentherephtalat (PET), Polybutylentherephtalat (PBT) oder Polyamid (PA) besteht und die Endlosfaser-Verstärkung (EF) aus Glas-, Kohle- oder Aramidfasern besteht.

19. Verfahren nach Anspruch 1, **dadurch gekennzeichnet, dass** die EF-Profile (10) eine dünne Oberflächenschicht (z.B. 0.1 - 0.2 mm) aus reinem Thermoplastmaterial ohne EF-Faserverstärkung aufweisen und/oder aus Lagen mit unterschiedlichen Faserorientierungen aufgebaut sind.

20. Verfahren nach Anspruch 1, **dadurch gekennzeichnet, dass** zusätzliche, geformte, thermisch invers behandelte EF-Profile (10*) mit einem formfesten Innenbereich (88) und einem geschmolzenen Aussenbereich (89) hergestellt werden zum formstabilen Transfer ins LFT-Werkzeug (31).

21. Verfahren nach Anspruch 1, **dadurch gekennzeichnet, dass** die EF-Profile lokal unterschiedlich starke Schockkühlungsbereiche mit entsprechend unterschiedlich starker thermoplastischer Verbindung zwischen EF-Profil (10) und LFT-Masse (6) und (definiert) unterschiedlicher Profilformerhaltung beim LFT-Verpressen aufweisen.

22. Verfahren nach Anspruch 20, **dadurch gekennzeichnet, dass** die EF-Profile (10) lokal unterschiedliche Schockkühlungsbereiche aufweisen, z.B. mit
minimaler Schockkühlung (T3, Q1.3),
mittlerer Schockkühlung (T2, Q1.2) und
starker Schockkühlung (T1, Q1.1).

23. Verfahren nach Anspruch 1, **dadurch gekennzeichnet, dass** eine am LFT-Werkzeug (31) anliegende Oberfläche (11) der EF-Profile vorher einseitig stark schockgekühlt wird und die gegenüberliegende Seite schwächer schockgekühlt wird zur optimalen Verbindung mit der LFT-Masse (6).

24. Verfahren nach Anspruch 17, **dadurch gekennzeichnet, dass** die Phasenumwandlungswärme des kristallinen Materials (Kristallisationswärme, latente Wärme) in einem Hysteresebereich DEn beim Schockkühlen genutzt wird.

25. Verfahren nach Anspruch 17, **dadurch gekennzeichnet, dass** die Oberfläche (11) der EF-Profile nach der Schockkühlung von einer Temperatur unterhalb des Kristallisations-Temperaturbereichs DTkr sehr rasch wieder auf eine Temperatur über DTkr angehoben wird.

26. Verfahren nach Anspruch 17, **dadurch gekennzeichnet, dass** beim Schockkühlen mit langsamerem Durchlaufen eines Kristallisations-Temperaturbereichs DTkr in einer Unterschicht (13)ein entsprechender kristallisierter Anteil erzeugt wird.

27. Verfahren nach Anspruch 1, **dadurch gekennzeichnet, dass** die EF-Profile (10) in unterschiedlichen Einbau-Lagen in Ausformungen (7, 8) des LFT-Werkzeugs (31) positioniert werden.

28. Verfahren nach Anspruch 1, **dadurch gekennzeichnet, dass** die EF-Profile (10) im LFT-Werkzeug am unteren (31u) und/oder am oberen Werkzeug (31o) positioniert bzw. fixiert werden.

29. Anlage (40) zur Herstellung von strukturellen Bauteilen aus Langfaserthermoplast (LFT) mit integrierten Endlosfaser (EF)-Verstärkungen in einem einstufigen LFT-Druck-Herstellverfahren, mit einer LFT Druck-Herstellvorrichtung mit einem LFT Werkzeug (31), einer Anlagensteuerung (45) und einer Handlingeinheit (42), **gekennzeichnet durch**
- eine Aufheizstation (15) zum Aufheizen von imprägnierten EF-Bändem (5)
- eine EF-Profil-Formstation (20) zum Formen und Schockkühlen mit einer Profilpresse (23) und einem zweitteiligen Profilwerkzeug (21), in welches die EF-Bänder transferierbar sind,
- und mit einer Profil-Formstation-Steuerung (25), **durch** die ein kurzzeitiges Verpressen der EF-Bänder in der EF-Profil-Formstation und dabei ein Formen zum gewünschten EF-Profil (10) bewirkbar ist, so dass an der Profiloberfläche (11) **durch** Kontakt mit dem thermisch konditionierten Profilwerkzeug (21) mit hohem Wärmeübergang (Q1) eine schockgekühlte, formstabile dünne Mantelschicht (12) gebildet wird
- und das EF-Profil nach einer definierten kurzen Schockkühlzeit (ts) sofort vollständig vom Profilwerkzeug trennbar und mittels der Handlingeinheit (42) in das LFT-Werkzeug (31) der LFT-Druck-Herstellvorrichtung transferierbar und dort definiert positionierbar ist
- und dort eine geschmolzene LFT-Masse (6) einbringbar und mit dem EF-Profil (10) zusammen unter Druck setzbar bzw. verpressbar ist, wobei die Profil-Formstation-Steuerung (25) und die Anlagensteuerung (45) so ausgelegt sind, dass beim UnterDruck-Setzen bzw. Verpressen der geschmolzenen LFT-Masse (6) und des EF-Profils (10)
- die Mantelschicht (12) an der Oberfläche (11) wieder aufgeschmolzen und mit der umgebenden LFT-Masse (6) thermoplastisch verschmolzen wird.

30. Anlage nach Anspruch 29, **gekennzeichnet durch** eine EF-Profil-Formstation (20) mit Profilwerkzeugen (21), welche bereichsweise lokal unterschiedliche thermische Konditionierungen bzw. Wärmeübergänge (Q1), spezifische Wärmen und Wärmeleitfähigkeiten, Wärmeeindring-Koeffizienten (ae) oder Werkzeugtemperaturen (Twp) aufweisen.

31. Anlage nach Anspruch 29, **gekennzeichnet durch** eine EF-Profil-Formstation (20) mit einem Verschiebeportal (17) und Handlingelementen (19) zum Vorformen und Transferieren der EF-Bänder (5).

32. Anlage nach Anspruch 29 **gekennzeichnet durch** eine IR-Aufheizstation (15) mit einer Schutzgasatmosphäre (27), einem Transportband (16), einem TransferRoboter (42) mit Greifern (26, 37) zum Transferieren von EF-Profilen und geschmolzener LFT-Masse, einem LFT-Extruder (34), einer LFT-Presse (30) und einer Anlagensteuerung (45) mit Teilsteuerungen (25, 35, 36) für die verschiedenen Stationen.

33. Strukturbauteil (1) mit teilkristallinem Thermoplastmaterial und mit mindestens einem EF-Profil (10) in einer LFT-Masse (6), **dadurch gekennzeichnet, dass** es hergestellt ist gemäss dem Verfahren von Anspruch 1 mit schockgekühlten EF-Profilen, und die EF-Profile (10) im Bereich einer Unterschicht (13) unterhalb der Profiloberfläche (11) eine erhöhte Kristallisation (101) aufweisen.

34. Strukturbauteil nach Anspruch 33, **dadurch gekennzeichnet, dass** die EF-Profile (10) eine genau definierte Formgebung und eine genau definierte Position im Strukturbauteil (1) aufweisen.

35. Strukturbauteil nach Anspruch 33, **dadurch gekennzeichnet, dass** an Kontaktflächen (9) zwischen EF-Profilen (10) und LFT-Masse (6) eine gerichtete Kristallisation (102) über die Kontaktfläche hinweg vorhanden ist.

## Claims

1. Method for the production of structural components out of long-fibre thermoplastic (LFT) with integrated continuous fibre (EF) reinforcements in a single stage LFT - pressing manufacturing process,
**characterised in that**
- impregnated EF - tapes (5) are melted open in a heating station (15) and subsequently are transferred into a two-part profile tool (21) of an EF - profile forming station (20),
- there are pressed for a short time period and in doing so are shaped into the required EF - profile (10) and that while this is done on the profile surface (11) through contact with the
- thermally conditioned profile tool (21) by means of a high heat transfer (Q1) a shock-cooled, dimensionally stable thin casing layer (12) is formed,
- the EF - profile following a defined short shock-cooling period (ts) is immediately completely separated from the profile tool and transferred into an LFT - tool (31) and there positioned in a defined manner,
- thereupon a molten LFT - mass (6) is introduced and together with the EF - profile (10) is put under pressure, resp., is pressed,
- so that the casing layer (12) is melted open again at the surface (11)
- and is thermoplastically melted together with the surrounding LFT - mass (6).

2. Method according to claim 1, **characterised in that** as the LFT - pressing manufacturing process an LFT - extrusion process with a vertical LFT - press (30) and a horizontal pressing tool (31) is utilised.

3. Method according to claim 1, **characterised in that** as the LFT - pressing manufacturing process an LFT - injection moulding process is utilised.

4. Method according to claim 3, **characterised in that** an LFT - injection moulding process with back pressing in the source flow is utilised.

5. Method according to claim 1, **characterised in that** several EF - profiles (10.1, 10.2, 10.3) are positioned in the LFT - tool (31) and subsequently pressed together with the LFT - mass (6).

6. Method according to claim 1, **characterised in that** EF - profiles are simultaneously produced in more than one EF - profile production line (20.1, 20.2).

7. Method according to claim 1, **characterised in that** in a profile tool (21) more than one EF - profile (10.1, 10.2) is produced.

8. Method according to claim 1, **characterised in that** in an EF - profile forming station (20) with more than one profile tool (21.1, 21.2) EF - profiles are pressed simultaneously.

9. Method according to claim 1, **characterised in that** in the EF - profile forming station a multi-stage profile forming process is carried out by means of a multipart profile tool (21 u, 21o, 21.3).

10. Method according to claim 1, **characterised in that** the EF - tapes (5) are preformed in plastic condition by pre-forming elements (19) during the transfer into the profile tool (21).

11. Method according to claim 1, **characterised in that** the EF - profiles (10) comprise a three-dimensional profile shaping.

12. Method according to claim 1, **characterised in that** the EF - profiles (10) in longitudinal direction comprise a bend, a twist, a fold and/or a surface structuring and differing cross-sectional shapes.

13. Method according to claim 1, **characterised in that** with the shaping of the tools (21,31) shapings on the EF - profiles (22) and shapings of the LFT - mass (32) for force introductions and for force transmissions between the EF - profiles (10) and the LFT - mass (6) as well as to inserts (4) are produced.

14. Method according to claim 1, **characterised in that** an EF - profile with a positioning shoulder (55), a thick tensile - and compressive force zone (56) on top and underneath as well as a thinner thrust zone (57) in between is formed, which is positioned in a rib (8) or in a crimp (7) of the structural component.

15. Method according to claim 1, **characterised in that** the shock-cooling period (ts) is situated in the range of from 1 to 5 sec.

16. Method according to claim 1, **characterised in that** the LFT - mass (6) comprises an average fibre length of at least 3 mm.

17. Method according to claim 1, **characterised in that** the thermoplastic material consists of partially crystalline polymers.

18. Method according to claim 1, **characterised in that** the thermoplastic material consists of partially crystalline polymers such as polypropylene (PP), polyethylene-therephtalate (PET), polybutylene-therephtalate (PBT) or polyamide (PA) and the continuous fibre reinforcement (EF) consists of glass -, carbon - or aramide fibres.

19. Method according to claim 1, **characterised in that** the EF - profiles (10) comprise a thin surface layer (e.g., 0.1 - 0.2 mm) out of pure thermoplastic material without EF - fibre reinforcement and/or are built-up out of layers with differing fibre orientations.

20. Method according to claim 1, **characterised in that** additional, shaped, EF - profiles (10*), which have been thermally inversely treated, with a non-deformable internal zone (88) and a molten external zone (89) are produced for the dimensionally stable transfer into the LFT - tool (31).

21. Method according to claim 1, **characterised in that** the EF - profiles comprise locally differingly strong shock-cooling zones with correspondingly differingly strong thermoplastic bonding between EF - profile (10) and LFT - mass (6) and (defined) differing profile shape preservation during the LFT - pressing.

22. Method according to claim 20, **characterised in that** the EF - profiles (10) comprise locally differing shock-cooling zones, e.g., with
minimum shock-cooling (T3, Q1.3),
medium shock-cooling (T2, Q 1.2) and
strong shock-cooling (T1, Q1.1).

23. Method according to claim 1, **characterised in that that** a surface (11) of the EF - profiles adjacent to the LFT - tool (31) is beforehand strongly shock-cooled on one side and the opposite side is more weakly shock-cooled for the optimum bonding with the LFT - mass (6).

24. Method according to claim 17, **characterised in that** phase transformation heat of the crystalline material (crystallisation heat, latent heat) is exploited during the shock-cooling in a hysteresis range DEn.

25. Method according to claim 17, **characterised in that** surface (11) of the EF - profiles following the shock-cooling are very rapidly brought back again to a temperature above DTkr from a temperature below the crystallisation temperature range DTkr.

26. Method according to claim 17, **characterised in that** during the shock-cooling with a slower passage through a crystallisation temperature range DTkr a corresponding crystalline proportion is generated in a lower layer (13).

27. Method according to claim 1, **characterised in that** the EF - profiles (10) are positioned in shapings (7, 8) of the LFT - tool (31) in differing fitting positions.

28. Method according to claim 1, **characterised in that** the EF - profiles (10) in the LFT - tool are positioned, resp., fixed on the lower (31u) and/or on the upper tool (310).

29. Installation (40) for the production of structural components out of long-fibre thermoplastic (LFT) with integrated continuous fibre (EF) - reinforcements in a single stage LFT - pressing manufacturing process with an LFT - pressing manufacturing device, with an LFT-tool (31), an installation control system (45) and a handling unit (42)
**characterised by**
- a heating station (15) for the heating-up of impregnated EF - tapes (5)
- an EF - profile forming station (20) for the shaping and shock-cooling with a profile press (23) and a two-part profile tool (21), into which the EF - tapes are transferable,
- and with a control of the EF-profile forming station (25), with which a pressing of the EF-tapes in the EF-profile forming station for a short time period and in doing so a shaping of the required EF -profile (10) is carried out, so that by contact with the thermally conditioned profile tool (21) at the profile surface (11) with a high heat transfer (Q1) a shock-cooled, dimensionally stable thin casing layer (12) is formed and the EF - profile following a defined short shock-cooling period (ts) is immediately completely separated from the profile tool and by means of the handling unit (42) is transferable into the LFT - tool (31) of the LFT - pressing manufacturing device and there is positioned in a defined manner,
- and there a molten LFT - mass (6) is introduced and together with the EF - profile (10) is pressed,
- and whereby the control of the EF-profile forming station (25) and the installation control system (45) are so adjusted that by pressing of the molten LFT-mass (6) and the EF-profile (10) the casing layer (12) is melted open again at the profile surface (11)
- and is thermoplastically melted together with the surrounding LFT - mass (6).

30. Installation according to claim 29, **characterised by** an EF - profile forming station (20) with profile tools (21), which in zones comprise locally differing thermal conditionings, resp., heat transfers (Q1), specific heats and heat penetration coefficients (ae) or tool temperatures (Twp).

31. Installation according to claim 29, **characterised by** an EF - profile forming station (20) with a transfer portal (17) and handling elements (19) for the pre-forming and transferring of the EF - tapes (5).

32. Installation according to claim 29, **characterised by** an IR - heating station (15) with a protection gas atmosphere (27), a chain conveyor (16), a transfer robot (42) with grippers (26, 37) for the transferring of the EF - profiles and molten LFT - mass, an LFT - extruder (34), an LFT - press (30) and an installation control system (45) with partial controls (25, 35, 36) for the different stations.

33. Structural component (1) with partially crystalline thermoplastic material and with at least one EF - profile (10) integrated in an LFT - mass (6), **characterised in that** it is produced according to the method of claim 1 with shock-cooled EF - profiles, and that the EF - profiles (10) in a zone of a lower layer (13) below the profile surface (11) comprise an enhanced crystallisation (101).

34. Structural component according to claim 33, **characterised in that** the EF - profiles (10) comprise a precisely defined shaping and a precisely defined position within the structural component (1).

35. Structural component according to claim 33, **characterised in that** on contact surfaces (9) between EF - profiles (10) and LFT - mass (6) it comprises a directed crystallisation (102) over the contact surface.

## Revendications

1. Procédé pour la fabrication de composants structurels en matière thermoplastique renforcée fibres longues (LFT) à renforcements par fibres continues (EF) intégrées, par procédé à un seul stade de fabrication de LFT sous pression,
**caractérisé en ce que**
-- des bandes EF imprégnées (5) sont fondues sur un poste de chauffe (15) avant d'être transférées à un poste de formage de profilé EF (20) dans un outil à profiler (21) en deux pièces ;
-- où elles sont brièvement comprimées et formées de manière à obtenir le profilé EF (10) souhaité, et **en ce que** sur la surface du profilé (11), par contact avec
-- l'outil à profiler (21) conditionné thermiquement à transfert de chaleur (Q1) élevé, une couche d'enrobage (12) mince refroidie par choc et de forme stable est alors formée,
-- le profilé EF étant entièrement séparé de l'outil à profiler dès la fin d'un court temps de refroidissement-choc défini (ts) et transféré dans un outil LFT (31) où il est positionné de manière définie,
-- avant d'appliquer une masse de LFT fondue (6) et de la mettre sous pression ou de la comprimer avec le profilé EF (10),
-- de manière à fondre une nouvelle fois la couche d'enrobage (12) à la surface (11)
-- et à la fusionner thermoplastiquement à la masse LFT (6) environnante.

2. Procédé selon la revendication 1, **caractérisé en ce qu'**un procédé de filage de LFT à presse LFT verticale (30) et moule à compression horizontal (31) est appliqué en tant que procédé de fabrication de LFT sous pression.

3. Procédé selon la revendication 1, **caractérisé en ce qu'**un procédé d'injection LFT est appliqué en tant que procédé de fabrication de LFT sous pression.

4. Procédé selon la revendication 3, **caractérisé en ce qu'**un procédé d'injection LFT avec surmoulage par compression à flux laminaire est appliqué.

5. Procédé selon la revendication 1, **caractérisé en ce que** plusieurs profilés EF (10.1, 10.2, 10.3) sont positionnés dans l'outil LFT (31) avant d'être comprimés avec la masse LFT (6).

6. Procédé selon la revendication 1, **caractérisé en ce que** des profilés EF sont simultanément produits sur plus d'une chaîne de fabrication de profilés EF (20.1, 20.2).

7. Procédé selon la revendication 1, **caractérisé en ce que** plus d'un profilé EF (10.1, 10.2) sont produits dans un outil à profiler (21).

8. Procédé selon la revendication 1, **caractérisé en ce que** des profilés EF sont simultanément comprimés sur un poste de formage de profilés EF (20) avec plus d'un outil à profiler (21.1, 21.2).

9. Procédé selon la revendication 1, **caractérisé en ce qu'**un processus de formage de profilés en plusieurs stades est exécuté sur le poste de formage de profilés au moyen d'un outil à profiler en plusieurs pièces (21u, 21o, 21.3).

10. Procédé selon la revendication 1, **caractérisé en ce que** les bandes EF (5) en état de plasticité sont préformées par des éléments de préformage (19) lors du transfert à l'outil à profiler (21).

11. Procédé selon la revendication 1, **caractérisé en ce que** les profilés EF (10) présentent une forme de profilé en trois dimensions.

12. Procédé selon la revendication 1, **caractérisé en ce que** les profilés EF (10) présentent dans le sens de la longueur une flexion, une torsion, un pliage et/ou une structuration de surface, et différentes formes de section.

13. Procédé selon la revendication 1, **caractérisé en ce que** le formage des outils (21, 31) génère des déformations sur les profilés EF (22) et des déformations de LFT (32) pour des applications d'efforts et des transitions d'efforts entre les profilés EF (10) et la masse LFT (6) ainsi que vers des inserts (4).

14. Procédé selon la revendication 1, **caractérisé en ce qu'**un profilé EF est formé avec un talon de positionnement (55), une zone épaisse de traction et de pression (56) sur le haut et sur le bas ainsi qu'une zone intermédiaire de poussée (57) plus mince, ledit profilé EF étant positionné dans une nervure (8) ou une moulure (7) du composant.

15. Procédé selon la revendication 1, **caractérisé en ce que** le temps de refroidissement-choc (ts) est compris entre 1 et 5 secondes.

16. Procédé selon la revendication 1, **caractérisé en ce que** la masse LFT (6) présente une longueur de fibre moyenne de 3 mm au moins.

17. Procédé selon la revendication 1, **caractérisé en ce que** la matière thermoplastique est composée de polymères partiellement cristallins.

18. Procédé selon la revendication 1, **caractérisé en ce que** la matière thermoplastique est composée de polymères partiellement cristallins tels que polypropylène (PP), polyéthylène-téréphtalate (PET), polybutylène-téréphtalate (PBT) ou polyamide (PA), et le renforcement par fibres continues (EF) de fibres de verre, de carbone ou d'aramide.

19. Procédé selon la revendication 1, **caractérisé en ce que** les profilés EF (10) comportent une couche superficielle mince (de 0,1 mm à 0,2 mm, p. ex.) en matière thermoplastique pure sans renforcement par fibres EF et/ou en strates à fibres différemment orientées.

20. Procédé selon la revendication 1, **caractérisé en ce que** des profilés EF (10*) complémentaires, formés, à traitement thermique inversé avec une zone intérieure de forme stable (88) et une zone extérieure (89) fondue, sont fabriqués pour un transfert à stabilité dimensionnelle dans l'outil LFT (31).

21. Procédé selon la revendication 1, **caractérisé en ce que** les profilés EF présentent localement des zones de refroidissement-choc d'épaisseur différenciée avec une liaison thermoplastique d'épaisseur différenciée en conséquence entre le profilé EF (10) et la masse LFT (6), et un maintien différencié (de manière définie) de forme de profil lors de la compression LFT.

22. Procédé selon la revendication 20, **caractérisé en ce que** les profilés EF (10) présentent localement des zones de refroidissement-choc d'épaisseur différenciée, p. ex. avec
un refroidissement-choc minimal (T3, Q1.3),
un refroidissement-choc moyen (T2, Q1.2), et
un refroidissement-choc fort (T1, Q1.1).

23. Procédé selon la revendication 1, **caractérisé en ce qu'**une surface (11) des profilés EF adjacente à l'outil LFT (31) est préalablement fortement refroidie par choc sur un côté, le côté opposé subissant un refroidissement-choc moindre pour une liaison optimale à la masse LFT (6).

24. Procédé selon la revendication 17, **caractérisé en ce que** la chaleur de transition de phase de la matière cristalline (chaleur de cristallisation, chaleur latente) est exploitée dans une plage d'hystérèse DEn lors du refroidissement-choc.

25. Procédé selon la revendication 17, **caractérisé en ce que** la surface (11) des profilés EF est après refroidissement-choc très rapidement remontée d'une température inférieure à la plage de température de cristallisation DTkr à une température supérieure à DTkr.

26. Procédé selon la revendication 17, **caractérisé en ce que**, lors du refroidissement-choc avec traversée plus lente d'une plage de température de cristallisation DTkr, une partie cristallisée correspondante est générée dans une sous-couche (13).

27. Procédé selon la revendication 1, **caractérisé en ce que** les profilés EF (10) sont positionnés dans différentes positions de montage dans des déformations (7, 8) de l'outil LFT (31).

28. Procédé selon la revendication 1, **caractérisé en ce que** les profilés EF (10) sont positionnés ou fixés contre l'outil inférieur (31u) et/ou contre l'outil supérieur (31o) dans l'outil LFT.

29. Installation (40) pour la fabrication de composants structurels en matière thermoplastique renforcée fibres longues (LFT) à renforcements par fibres continues (EF) intégrées, par procédé à un seul stade de fabrication de LFT sous pression avec un outil LFT (31), une commande d'installation (45) et une unité de manipulation (42),
**caractérisée par**
-- un poste de chauffe (15) pour le chauffage de bandes EF imprégnées (5),
-- un poste de formage de profilé EF (20) pour le formage et le refroidissement-choc avec une presse à profiler (23) et un outil à profiler (21) en deux pièces, dans lequel les bandes EF sont transférables,
-- et avec une commande de poste de formage de profilés (25) permettant d'appliquer une compression brève des bandes EF sur le poste de formage de profilés EF pour leur formage de manière à obtenir le profilé EF (10) souhaité, si bien que sur la surface du profilé (11); par contact avec l'outil à profiler (21) conditionné thermiquement à transfert de chaleur (Q1) élevé, une couche d'enrobage (12) mince refroidie par choc et de forme stable est formée,
-- le profilé EF étant entièrement séparable de l'outil à profiler dès la fin d'un court temps de refroidissement-choc défini (ts) et transférable au moyen de l'unité de manipulation (42) dans l'outil LFT (31) du dispositif de fabrication de LFT sous pression, où il est positionnable de manière définie,
-- une masse de LFT fondue (6) y étant applicable et pouvant être mise sous pression ou comprimée avec le profilé EF (10), la commande de poste de formage de profilés (25) et la commande d'installation (45) étant conçues de manière que, lors de la mise sous pression ou de la compression de la masse LFT fondue (6) et du profilé EF (10),
-- la couche d'enrobage (12) soit une nouvelle fois fondue à la surface (11) et fusionnée thermoplastiquement à la masse LFT (6) environnante.

30. Installation selon la revendication 29, **caractérisée par** un poste de formage de profilés EF (20) avec des outils à profiler (21) présentant partiellement des conditionnements thermiques ou des transferts de chaleur (Q1), des chaleurs et des conductivités thermiques spécifiques, des coefficients de pénétration thermique (ae) ou des températures d'outil (Twp) localement différenciés.

31. Installation selon la revendication 29, **caractérisée par** un poste de formage de profilés EF (20) avec un portique d'avance (17) et des éléments de manipulation (19) pour le préformage et le transfert des bandes EF (5).

32. Installation selon la revendication 29, **caractérisée par** un poste de chauffe à infrarouges (15) avec une atmosphère protectrice (27), un tapis de transport (16), un robot de transfert (42) avec des préhenseurs (26, 37) pour le transfert de profilés EF et d'une masse LFT fondue, une extrudeuse LFT (34), une presse LFT (30) et une commande d'installation (45) avec des commandes partielles (25, 35, 36) pour les différents postes.

33. Composant structurel (1) avec une matière thermoplastique partiellement cristalline et avec au moins un profilé EF (10) dans une masse LFT (6), **caractérisé en ce qu'**il est fabriqué suivant le procédé de la revendication 1 avec des profilés EF refroidis par choc, et **en ce que** les profilés EF (10) présentent une cristallisation (101) élevée dans la zone d'une sous-couche (13) sous la surface de profilé (11).

34. Composant structurel selon la revendication 33, **caractérisé en ce que** les profilés EF (10) présentent un formage précisément défini et une position précisément définie dans le composant structurel (1).

35. Composant structurel selon la revendication 33, **caractérisé en ce que**, contre des surfaces de contact (9) entre les profilés EF (10) et la masse LFT (6), une cristallisation (102) orientée est présente au-delà de la surface de contact.
